(19) Europäisches Patentamt
European Patent Office
Office européen des brevets

(11) EP 1 392 769 B1

(12) # FASCICULE DE BREVET EUROPEEN

(45) Date de publication et mention de la délivrance du brevet:
**25.01.2012 Bulletin 2012/04**

(21) Numéro de dépôt: **02735225.1**

(22) Date de dépôt: **05.04.2002**

(51) Int Cl.:
***C08K 5/548*** *(2006.01)* ***C08L 21/00*** *(2006.01)*
***B60C 1/00*** *(2006.01)* ***B29D 30/00*** *(2006.01)*

(86) Numéro de dépôt international:
**PCT/EP2002/003774**

(87) Numéro de publication internationale:
**WO 2002/083782 (24.10.2002 Gazette 2002/43)**

(54) **PNEUMATIQUE ET BANDE DE ROULEMENT COMPORTANT COMME AGENT DE COUPLAGE UN TETRASULFURE DE BIS-ALKOXYSILANE**

REIFEN UND LAUFFLÄCHENPROFIL WELCHES ALS KUPPLUNGSMITTEL EIN TETRASULFID-BIS ALKOXYSILAN ENTHÄLT

TYRE AND RUNNING TREAD COMPRISING AS COUPLING AGENT A BIS-ALKOXYSILANE TETRASULPHIDE

(84) Etats contractants désignés:
**AT BE CH CY DE DK ES FI FR GB GR IE IT LI LU MC NL PT SE TR**

(30) Priorité: **10.04.2001 FR 0105005**

(43) Date de publication de la demande:
**03.03.2004 Bulletin 2004/10**

(73) Titulaires:
- **Société de Technologie Michelin**
  **63000 Clermont-Ferrand Cedex 09 (FR)**
- **Michelin Recherche et Technique S.A.**
  **1763 Granges-Paccot (CH)**

(72) Inventeurs:
- **DUREL, Olivier**
  **F-63112 Blanzat (FR)**
- **RAULINE, Roland**
  **F-63830 Durtol (FR)**
- **GUENNOUNI, Nathalie**
  **F-69540 Irigny (FR)**

(74) Mandataire: **Ribière, Joel**
**M.F.P. Michelin,**
**SGD/LG/PI - F35 - Ladoux**
**63040 Clermont-Ferrand Cedex 9 (FR)**

(56) Documents cités:
**EP-A- 0 680 997** **EP-A- 0 864 605**
**EP-A- 1 043 357** **US-A- 5 708 053**

Remarques:
Le dossier contient des informations techniques présentées postérieurement au dépôt de la demande et ne figurant pas dans le présent fascicule.

EP 1 392 769 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte aux pneumatiques et aux bandes de roulement de pneumatiques incorporant des compositions d'élastomères diéniques renforcées d'une charge blanche ou inorganique.

Elle est relative en particulier aux agents de couplage utilisés pour le couplage de charges inorganiques renforçantes et d'élastomères diéniques dans de tels pneumatiques ou bandes de roulement de pneumatiques.

On sait que d'une manière générale, pour obtenir les propriétés de renforcement optimales conférées par une charge dans un pneumatique, en particulier dans une bande de roulement d'un tel pneumatique, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

Depuis que les économies de carburant et la nécessité de protéger l'environnement sont devenues une priorité, il s'est avéré toutefois nécessaire de produire des pneumatiques ayant une résistance au roulement réduite, sans pénalisation de leur résistance à l'usure.

Ceci a été rendu possible notamment grâce à l'emploi, dans les pneumatiques ou bandes de roulement de ces pneumatiques, de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, donc synonyme d'une plus basse résistance au roulement pour les pneumatiques les comportant, ainsi qu'une adhérence améliorée sur sol mouillé, enneigé ou verglacé.

Des pneumatiques ou bandes de roulement de pneumatiques incorporant des compositions de caoutchouc renforcées de charges inorganiques renforçantes du type siliceuses ou alumineuses, ont notamment été décrits dans les brevets ou demandes de brevet EP-A-501 227 ou US-A-5 227 425, EP-A-735 088 ou US-A-5 852 099, EP-A-810 258 ou US-A-5 900 449, WO 99/02590, WO 00/05300, WO 00/05301, WO02/10269.

On citera en particulier les documents EP-A-501 227 et EP-A-735 088 qui divulguent des pneumatiques ou bandes de roulement de pneumatiques incorporant des compositions de caoutchouc diénique renforcés de silices précipitées à haute dispersibilité, présentant une faible hystérèse et une résistance au roulement nettement réduite, sans que soient affectées par ailleurs les autres propriétés, en particulier celles d'adhérence, d'endurance et surtout de résistance à l'usure. Des pneumatiques ou bandes de roulement présentant un tel compromis de propriétés contradictoires sont également décrits dans la demande EP-A-810 258, avec à titre de charges inorganiques renforçantes, des alumines spécifiques à dispersibilité élevée.

L'utilisation de ces charges inorganiques spécifiques à titre de charge renforçante a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion ou liaison entre la surface des particules de charge inorganique et l'élastomère, tout en facilitant la dispersion de cette charge inorganique au sein de la matrice élastomérique.

On rappelle ici que par "agent de couplage" (charge inorganique/élastomère) on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-A-X", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- A représente un groupe divalent permettant de relier Y et X.

Les agents de couplage ne doivent en particulier pas être confondus avec de simples agents de recouvrement de charge inorganique qui, de manière connue, peuvent comporter la fonction "Y" active vis-à-vis de la charge inorganique mais sont dépourvus de la fonction "X" active vis-à-vis de l'élastomère diénique.

Des agents de couplage, notamment (silice/élastomère diénique), ont été décrits dans un grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telle que par exemple des fonctions soufrées (i.e., comportant du soufre).

Ainsi, il a été proposé dans les demandes de brevet FR-A-2 094 859 ou GB-A-1 310 379 d'utiliser un agent de couplage mercaptoalkoxysilane pour la fabrication de bandes de roulement de pneumatiques. Il fut rapidement mis en évidence et il est aujourd'hui bien connu que de tels mercaptosilanes sont susceptibles de procurer d'excellentes propriétés de couplage silice/élastomère, mais que l'utilisation industrielle de ces agents de couplage n'est pas possible en raison de la très forte réactivité des fonctions soufrées type thiols -SH (fonctions "X") conduisant très rapidement au cours de la préparation des compositions de caoutchouc, dans un mélangeur interne, à des vulcanisations prématurées encore appelées "grillage" (*"scorching"*), à des viscosités à l'état cru très élevées, en fin de compte à des compositions de caoutchouc quasiment impossibles à travailler et à mettre en oeuvre industriellement. Pour illustrer ce problème, on peut citer par exemple les documents FR-A-2 206 330, US-A-3 873 489, US-A-4 002 594.

Pour remédier à cet inconvénient, il a été ensuite proposé de remplacer ces mercaptoalkoxysilanes par des alkoxysilanes polysulfurés, notamment des polysulfures de bis-(alkoxylsilylalkyle) tels que décrits dans de très nombreux documents (voir par exemple FR-A-2 149 339, FR-A-2 206 330, US-A-3 842 111, US-A-3 873 489, US-A-3 997 581).

Parmi tous ces polysulfures, doivent être cités en particulier les polysulfures de bis-(trialkoxylsilylpropyle), tout particulièrement le tétrasulfure de bis 3-triéthoxysilylpropyle (en abrégé TESPT).

On rappelle que le TESPT, de formule $[(C_2H_5O)_3Si(CH_2)_3S_2]_2$, est commercialisé notamment par la société Degussa sous.la dénomination Si69 (ou X50S lorsqu'il est supporté à 50% en poids sur du noir de carbone), ou encore par la société Osi Specialties sous la dénomination Silquest A1289 (dans les deux cas, sous la forme d'un mélange commercial de polysulfures $S_x$ avec une valeur moyenne pour x qui est proche de 4).

Cet alkoxysilane polysulfuré TESPT est considéré aujourd'hui comme le produit apportant, pour des pneumatiques ou bandes de roulement de pneumatique renforcés par une charge inorganique renforçante telle que de la silice, le meilleur compromis en terme de sécurité au grillage, d'hystérèse et de pouvoir renforçant. Il est à-ce titre l'agent de couplage de référence de l'homme du métier pour les pneumatiques chargés de silice à basse résistance au roulement, parfois qualifiés de "Pneus Verts" pour l'économie d'énergie offerte (ou *"energy-saving Green Tyres"*). Il suffit, pour s'en convaincre, de consulter les très nombreuses publications relatives à ces pneumatiques à base de silice et de TESPT.

Les compositions élastomériques à base de charge inorganique renforçante telle que silice et d'agent de couplage alkoxysilane polysulfuré tel que TESPT, présentent toutefois l'inconvénient connu de présenter une cinétique de vulcanisation très sensiblement ralentie, en règle générale d'un facteur deux à trois, par rapport aux compositions conventionnelles chargées de noir de carbone.

Les durées de cuisson plus longues qui en résultent, pénalisent, on le sait, la mise en oeuvre industrielle des pneumatiques ou bandes de roulement de pneumatiques à base de charges inorganiques renforçantes.

Or, les Demanderesses ont découvert lors de leurs recherches qu'un organosilane spécifique, en l'occurrence un alkoxysilane polysulfuré particulier, permet, de manière inattendue, de pallier cet inconvénient relatif à la cinétique de vulcanisation ; grâce à cet organosilane spécifique, des durées de cuisson sensiblement identiques à celles des compositions conventionnelles à base de noir de carbone deviennent accessibles.

Ce résultat important est obtenu qui plus est sans pénalisation, voire même dans de nombreux cas avec une amélioration des propriétés de couplage et de renforcement, offrant ainsi aux pneumatiques et à leurs bandes de roulement un compromis global de propriétés jusqu'ici jamais atteint avec le TESPT, a fortiori avec les autres alkoxysilanes polysulfurés connus.

En conséquence, un premier objet de l'invention concerne un pneumatique selon la revendication 1

Des monoalkoxysilanes polysulfurés répondant à la formule III ci-dessus avaient certes pu être très brièvement cités, dans tel ou tel document de l'art antérieur, le plus souvent parmi de longues listes de composés potentiellement utilisables comme agents de couplage (voir par exemple US-A-3 842 111, US-A-4 072 701, US-A-4 129 585, US-A-5 684 172, US-A-5 708 053, EP-A-1 043 357).

Mais, à la connaissance des Demanderesses, aucun document de l'état de la technique ne décrit la synthèse de tels composés de formule (III), a fortiori n'exemplifie son utilisation comme agent de couplage dans des pneumatiques ou bandes de roulement renforcés de charges inorganiques telles que silice.

Les pneumatiques de l'invention sont particulièrement destinés à équiper des véhicules de tourisme, véhicules 4x4 (à 4 roues motrices), deux roues (notamment vélos ou motos), camionnettes, "Poids-lourds" (c'est-à-dire métro, bus, engins de transport routier tels que camions, tracteurs, remorques).

Grâce à l'agent de couplage sélectionné de formule (III), les bandes de roulement des pneumatiques de l'invention ont révélé un compromis de propriétés jusqu'ici inégalé : résistance au roulement diminuée par rapport à

l'emploi de TESPT, synonyme d'économie de carburant, résistance à l'usure égale sinon supérieure à celle offerte par l'agent de couplage de référence TESPT, synonyme d'un kilométrage parcouru égal sinon supérieur, excellentes propriétés d'adhérence notamment sur sol mouillé, enneigé ou verglacé, typiques de celles susceptibles d'être fournies par une charge inorganique renforçante telle que silice, enfin, ce qui n'est pas le moindre, un temps de cuisson très nettement réduit, typiquement d'un facteur deux ou plus, par rapport au TESPT.

Des temps de cuisson réduits sont notamment avantageux pour les bandes de roulement destinées au rechapage, qu'il s'agisse de rechapage "à froid' (utilisation d'une bande de roulement précuite) ou de rechapage "à chaud" conventionnel (utilisation d'une bande de roulement à l'état cru). Dans ce dernier cas, une durée de cuisson réduite, outre le fait qu'elle diminue les coûts de production, limite la surcuisson (ou post-cuisson) imposée au reste de l'enveloppe (carcasse) du pneumatique usagé (déjà vulcanisé) ; grâce à l'invention, à temps de cuisson identique, les bandes de roulement peuvent aussi être cuites à une température plus basse, ce qui constitue un autre moyen de préserver la carcasse du problème de surcuisson évoqué ci-dessus.

Les pneumatiques ou bandes de roulement selon l'invention, à cinétique de vulcanisation améliorée, incorporant une composition à base d'une charge inorganique renforçante vulcanisable au soufre, sont susceptibles d'être préparés par un procédé comportant les étapes suivantes:

- incorporer à un élastomère diénique, dans un mélangeur :
  - une charge inorganique renforçante;
  - un tétrasulfure de bis-alkoxysilane à titre d'agent de couplage (charge inorganique/élastomère diénique),
- en malaxant thermomécaniquement le tout, en une ou plusieurs fois, jusqu'à atteindre une température maximale comprise entre 110°C et 190°C;
- refroidir l'ensemble à une température inférieure à 100°C;
- incorporer ensuite un système de vulcanisation;
- malaxer le tout jusqu'à une température maximale inférieure à 110°C;
- calandrer ou extruder la composition élastomérique ainsi obtenue sous la forme d'une bande de roulement de pneumatique ou d'un profilé de caoutchouc incorporé comme produit semi-fini dans le pneumatique,

ce procédé étant caractérisé en ce que ledit alkoxysilane répond à la formule (III) précitée.

L'invention a également pour objet une utilisation selon la revendication 20.

L'invention ainsi que ses avantages seront aisément compris à la lumière de la description et des exemples de réalisation qui suivent, ainsi que des figures relatives à ces exemples qui représentent des courbes de variation de module (en MPa) en fonction de l'allongement (en %), enregistrées pour des compositions de caoutchouc destinées à des bandes de roulement de pneumatiques conformes ou non à l'invention.

## I. MESURES ET TESTS UTILISES

### I-1. Caractérisation des polysulfures d'alkoxysilane

A) Détermination du nombre moyen x d'atomes de Soufre

Le nombre moyen x d'atomes de Soufre, par molécule d'alkoxysilane, est calculé selon la formule qui suit.

$$x = \frac{(W_S - W_{Sel}) / 32}{(W_{Si}/2) / 28}$$

avec:

- $W_s$ : pourcentage pondéral en Soufre total;
- $W_{sel}$ : pourcentage pondéral en Soufre élémentaire résiduel;
- $W_{si}$ : pourcentage pondéral en Silicium total.

$W_s$ et $W_{si}$ sont déterminés par la technique d'analyse élémentaire par fluorescence X, alors que $W_{sel}$ est déterminé par GPC (Gel Permeation Chromatography), comme indiqué ci-après.

La technique d'analyse élémentaire par fluorescence X est une méthode globale pour doser le Soufre total et le Silicium total ; elle fait appel à une solubilisation de l'échantillon dans le DMF (diméthylformamide) et non pas à une minéralisation de l'échantillon. L'appareillage utilisé est un spectromètre de fluorescence X de marque PHILIPS TW 2400, équipé d'un tube Rhodium.

Le DMSO (diméthylsulfoxyde), solubilisé dans le DMF, est utilisé comme étalon pour doser le soufre (gamme d'étalonnage en S : de 0 à 3000 ppm). Pour doser le silicium, du D4 (octaméthyltétrasiloxane) solubilisé dans le DMF est utilisé comme étalon (gamme d'étalonnage en Si : de 0 à 3000 ppm). L'échantillon est solubilisé dans le DMF pour la mesure, à raison de 0,5 g d'échantillon pour 40 g de DMF.

Le pourcentage pondéral en soufre élémentaire résiduel ($W_{sel}$) est dosé par GPC (Gel Permeation Chromatography):

- conditions analytiques: colonnes utilisées : 3 colonnes mixtes E PLGEL avec support styrène divinylbenzène, les colonnes étant calibrées par rapport à des étalons de polystyrène de 100 à 50 000 de masse ; détecteur : UV SHIMADZU SPD6A, longueur d'onde d'observation = 270 nm ; pompe d'alimentation en éluant : pompe WATERS ; injecteur : VISP 717+ ; éluant : dichlorométhane ; débit : 1 ml/min ; le standard interne de débit utilisé est le toluène (concentration en toluène dans l'éluant : 2/1000 poids/poids);

- étalonnage: volumes injectés: 10 µl pour l'étalon et 20-50 µl pour les échantillons ; gamme des concentrations utilisées : pour l'étalon de soufre élémentaire pur servant à établir la courbe de calibration, on utilise de 10 à 30 mg d'étalon dans 20 ml de dichlorométhane, et pour les échantillons on utilise 200 mg d'échantillon dans 20 ml de dichlorométhane;

- dosage: l'étalon et les échantillons sont solubilisés dans le dichlorométhane ; des solutions étalon de soufre sont injectées et une courbe d'étalonnage liant la surface du pic détecté et la concentration en soufre élémentaire injectée est établie; dans les mêmes conditions, les échantillons sont injectés et la concentration en soufre élémentaire résiduel est mesurée.

B) Analyses par RMN

Les analyses par RMN-$^{29}$Si, RMN-$^{1}$H et RMN-$^{13}$C sont faites dans les conditions suivantes:

1) RMN- $^{29}$Si

a) appareillage:

Les analyses RMN à une dimension du silicium-29 sont réalisées avec un spectromètre Bruker AMX 300 et une sonde 10 mm $^{29}$Si sélective fonctionnant avec une fréquence d'observation du silicium à 59 MHz.

Les déplacements chimiques (δ) sont exprimés en ppm, le tétraméthylsilane est utilisé comme référence externe pour les déplacements chimiques $^{1}$H et $^{29}$Si. La température est contrôlée par une unité de température variable (± 0,1°K). Les spectres RMN sont effectués à une température de 300°K.

Pour obtenir les spectres RMN du silicium-29 découplé du proton, est utilisée une séquence d'accumulation avec découplage de type *"inverse gated"* du proton (WALTZ 16). L'angle de l'impulsion silicium-29 est égal à 45° et la durée entre deux impulsions silicium est fixée à 4,5 s. Le signal de précession libre (FID) est obtenu après 4096 accumulations. La largeur spectrale est de 10870 Hz et le nombre de points définissant le signal de précession libre est égal à 32768.

b) préparation d'échantillons

Pour les échantillons qui nécessitent l'enregistrement de spectres RMN du silicium à une dimension, environ 2 ml de composé alkoxysilane sont dissous dans 7 ml d'une solution de chloroforme deutérié contenant 2,5.$10^{-2}$ mol/l de $Fe(acac)_3$ (acac = acétylacétonate).

2) RMN-$^{1}$H et RMN_$^{13}$C

- appareillage:

- préparation d'échantillons: 0,1 ml d'échantillon dans 0,5 ml de $CDCl_3$
- spectromètre : Bruker AMX 300
- sonde: QNP 5mm ($^1H$, $^{13}C$ ,$^{31}P$, $^{19}F$)
- les spectres RMN sont effectués à une température de 300°K (± 0,1°K).

• analyse RMN du $^1H$

Est utilisée une séquence d'acquisition simple, avec un angle d'impulsion de 30°, une durée entre impulsions de 4,6 s et 256 accumulations. La largeur spectrale est de 4500Hz et aucun traitement mathématique n'est pratiqué. La fréquence d'observation est de 300 MHz.

• analyse RMN du $^{13}C$

Est utilisée une séquence d'accumulation avec découplage du proton (WALTZ 16), avec un angle d'impulsion de 30°, une durée entre impulsions de 3 s et 8192 accumulations. La largeur spectrale est de 20000Hz et le signal est traité par une fonction exponentielle avant la transformée de Fourier. La fréquence d'observation est de 75 MHz.

Le solvant deutérié ($CDCl_3$) sert à compenser les dérives éventuelles du champ magnétique et permet de calibrer les spectres en déplacement chimique.

C) Détermination de la distribution en polysulfures $S_x$

La distribution molaire des polysulfures $S_x$, pour l'alkoxysilane considéré, est obtenue à partir du spectre RMN-$^{13}C$, en exploitant de manière connue les aires de pics caractéristiques des motifs $CH_2$ liés à $S_2$, $S_3$, $S_4$ et $S_{\geq 5}$.

Une expansion (ou grossissement) du spectre RMN-$^{13}C$, entre 41,0 et 44,0 ppm est tout d'abord faite ; ce spectre comporte au plus (cas où tous les polysulfures $S_2$ à $S_{\geq 5}$ sont présents) trois pics principaux (pics fins résolus) suivis d'un massif complexe.

Les trois pics principaux consécutifs, correspondant respectivement à $S_3$, $S_2$ et $S_4$ et situés en pratique dans la plage spectrale de 41,8 ppm à 42,6 ppm environ (typiquement, premier pic fin vers 42 ppm ; deuxième pic fin vers 42,3 ppm ; troisième pic fin vers 42,5 ppm) sont intégrés de vallée à vallée (I1, I2 et I3 sont les valeurs des intégrales correspondantes, respectivement), ainsi que le massif complexe, situé en pratique entre 42,7 ppm et 43,7 ppm environ (par exemple de 42,85 à 43,5 ppm environ), correspondant à $S_{\geq 5}$ (intégrale I4) ; puis la répartition est calculée ainsi:

- % molaire $S_2$ = (12 x 100) / (I1 + I2 + I3 + 14)
- % molaire $S_3$ = (I1 x 100) / (I1 + I2 + I3 + 14)
- % molaire $S_4$ = (I3 x 100) / (I1 + I2 + I3 + I4)
- % molaire $S_{\geq 5}$ = (14 x 100) / (I1 + I2 + I3 + I4).

On rappelle ici que, de manière connue, l'analyse par RMN ne distingue pas les polysulfures lourds $S_x$ avec $x \geq 5$ ($S_5$, $S_6$, $S_7$, ...) ; une seule valeur est donc accessible pour le total de ces polysulfures $S_{\geq 5}$.

I-2. Caractérisation des compositions de caoutchouc

Les compositions de caoutchouc sont caractérisées avant et après cuisson, comme indiqué ci-après.

A) Plasticité Mooney:

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

B) Temps de grillage:

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en

UM) de 5 unités au dessus de la valeur minimale mesurée pour cet indice.

C) Rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : $t_i$ est le délai d'induction, c'est-à-dire le temps nécessaire au début de la réaction de vulcanisation ; $t_\alpha$ (par exemple $t_{90}$ ou $t_{99}$) est le temps nécessaire pour atteindre une conversion de $\alpha$%, c'est-à-dire $\alpha$% (par exemple 90% ou 99%, respectivement) de l'écart entre les couples minimum et maximum. On mesure également la constante de vitesse de conversion notée K (exprimée en $min^{-1}$), d'ordre 1, calculée entre 30% et 80% de conversion, qui permet d'apprécier la cinétique de vulcanisation.

D) Essais de traction:

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés MA10), 100% d'allongement (notés MA100) et 300% d'allongement (notés MA300). On mesure également les contraintes à la rupture (en MPa) et les allongements à la rupture (en %). Toutes ces mesures de traction sont effectuées dans les conditions normales de température (23$\pm$2°C) et d'hygrométrie (50$\pm$5% d'humidité relative), selon la norme française NF T 40-101 (décembre 1979).

Un traitement des enregistrements de traction permet également de tracer la courbe de module en fonction de l'allongement (voir figures 1 et 2 annexées), le module utilisé ici étant le module sécant vrai mesuré en première élongation, calculé en se ramenant à la section réelle de l'éprouvette et non à la section initiale comme précédemment pour les modules nominaux.

E) Test de *"bound rubber"*:

Le test dit de "*bound rubber*" permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc; liée à la charge renforçante au cours du mélangeage, donne une indication quantitative de l'activité renforçante de la charge dans la composition de caoutchouc. Une telle méthode a été décrite par exemple dans la norme française NF T 45-114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: Plastics, Rubber and Composites Processing and Applications, Vol. 25, No7, p. 327 (1996) ; Rubber Chemistry and Technology, Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 $cm^3$ de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement.

Le taux de "bound rubber" (% en poids), noté "BR", est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

F) Propriétés dynamiques:

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, à une température de 40°C. On effectue un balayage en amplitude de déformation de 0,1 à 50% (cycle aller), puis de 50% à 1% (cycle retour); pour le cycle retour, on enregistre la valeur maximale du facteur de perte, notée $\tan(\delta)_{max}$.

G) Pertes hystérétiques:

Les pertes hystérétiques (notées PH) sont mesurées par rebond à 60°C au 6ème choc, et exprimées en % selon la relation suivante:

$$PH\,(\%) = 100\,[\,(W_0 - W_1) / W_0\,]\,,$$

avec $W_0$ : énergie fournie ; $W_1$ : énergie restituée..

H) Dureté Shore A:

La dureté Shore A des compositions après cuisson est appréciée conformément à la norme ASTM D 2240-86.

I-3. Caractérisation des pneumatiques ou bandes de roulement

A) Résistance au roulement:

La résistance au roulement est mesurée sur un volant, selon la méthode ISO 87-67 (1992). Une valeur supérieure à celle du témoin, arbitrairement fixée à 100, indique un résultat amélioré c'ést-à-dire une résistance au roulement moindre.

B) Résistance à l'usure:

On soumet les pneumatiques à un roulage réel sur route, sur un véhicule automobile déterminé, jusqu'à ce que l'usure due au roulage atteigne les témoins d'usure disposés dans les rainures de la bande de roulement. Une valeur supérieure à celle du témoin, arbitrairement fixée à 100, indique un résultat amélioré c'est-à-dire un kilométrage parcouru supérieur.

C) Freinage sur sol sec:

Les pneumatiques sont montés sur un véhicule automobile équipé d'un système de freinage ABS et on mesure la distance nécessaire pour passer de 100 km/h à 0 km/h lors d'un freinage brutal sur un sol sec (béton bitumineux). Une valeur supérieure à celle du témoin, arbitrairement fixée à 100, indique un résultat amélioré c'est-à-dire une distance de freinage plus courte.

D) Freinage sur sol humide:

Les pneumatiques sont montés sur un véhicule automobile équipé d'un système de freinage ABS et on mesure la distance nécessaire pour passer de 50 km/h à 10 km/h lors d'un freinage brutal sur un sol arrosé (béton bitumineux). Une valeur supérieur à celle du témoin, arbitrairement fixée à 100, indique un résultat amélioré c'est-à-dire une distance de freinage plus courte.

E) Adhérence sur sol humide:

Pour apprécier les performances d'adhérence sur sol humide, on analyse le comportement des pneumatiques montés sur un véhicule automobile déterminé parcourant, sous des conditions de vitesse limite, un circuit fortement virageux et arrosé de manière à maintenir le sol humide.

On mesure d'une part le temps minimal nécessaire pour parcourir la totalité du circuit ; une valeur supérieure à celle du témoin, arbitrairement fixée à 100, indique un résultat amélioré c'est-à-dire un temps de parcours plus court.

Le pilote du véhicule, professionnel, attribue d'autre part une note globale, subjective, de comportement routier du véhicule - et donc des pneumatiques - sur ce circuit virageux arrosé; une note supérieure à celle du témoin, arbitrairement fixée à 100, indique un comportement global amélioré.

F) Poussée de dérive:

Chaque pneumatique testé est monté sur une roue de dimension adaptée et gonflé à 2,2 bars. On le fait rouler

à une vitesse constante de 80 km/h sur une machine automatique appropriée (machine type "sol-plan" commercialisée par la société MTS). On fait varier la charge notée "Z", sous un angle de dérive de 1 degré, et on mesure de manière connue la rigidité ou poussée de dérive notée "D" (corrigée de la poussée à dérive nulle), en enregistrant à l'aide de capteurs l'effort transversal sur la roue en fonction de cette charge Z. La poussée de dérive indiquée dans les tableaux est la pente à l'origine de la courbe D(Z). Une augmentation de poussée de dérive est favorable au comportement routier sur sol sec.

**II. CONDITIONS DE REALISATION DE L'INVENTION**

Les pneumatiques de l'invention incorporent des compositions de caoutchouc à base d'au moins chacun des constituants suivants: (i) un (au moins un) élastomère diénique (composant A défini ci-après), (ii) une (au moins une) charge inorganique à titre de charge renforçante (composant B défini ci-après), (iii) un (au moins un) alkoxysilane spécifique (composant C défini ci-après) en tant qu'agent de couplage (charge inorganique/élastomère diénique).

Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication des compositions de caoutchouc, des pneumatiques ou bandes de roulement, en particulier au cours de leur vulcanisation.

II-1. Elastomère diénique (composant A)

Par élastomère ou caoutchouc "diénique", on entend de manière connue un élastomère issu au moins en partie (i.e., un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les pneumatiques, conformes à l'invention:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc butyle), ainsi que les versions halogénées, en particulier chlorées ou bromées, dé ce type de copolymère.

Bien qu'elle s'applique à tout type d'élastomère diénique, l'homme du métier du pneumatique comprendra que la présente invention, en particulier lorsqu'elle s'applique à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le

vinylmésitylène, le divinylbenzène, le vinylnaphtalène.

Les copolymères peuvent contenir entre 99% et 20% en poids d'unités diéniques et entre 1 % et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymère de butadiène-isoprène et notamment ceux ayant une teneur en isoprène comprise entre 5% et 90% en poids et une température de transition vitreuse (Tg, mesurée selon norme ASTM D3418-82) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une tenseur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique est choisi dans le groupe des élastomères diéniques fortement insaturés constitué par les polybutadiènes ("BR"), les polyisoprènes ("IR"), le caoutchouc naturel ("NR"), les copolymères de butadiène, les copolymères d'isoprène et les mélanges de ces élastomères. De tels copolymères sont plus préférentiellement choisis dans le groupe constitué par les copolymères de butadiène-styrène ("SBR"), les copolymères d'isoprène-butadiène ("BIR"), les copolymères d'isoprène-styrène ("SIR") et les copolymères d'isoprène-butadiène-styrène ("SBIR").

Dans le cas d'un pneumatique pour véhicule tourisme, le composant A est par exemple un SBR, qu'il s'agisse d'un SBR préparé en émulsion ("ESBR") ou d'un SBR préparé en solution ("SSBR"), un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C. Un tel copolymère SBR, de préférence un SSBR, est éventuellement utilisé en mélange avec un polybutadiène (BR) possédant de préférence plus de 90% de liaisons cis-1,4.

Dans le cas d'un pneumatique pour véhicule Poids-lourd, le composant A est notamment un élastomère isoprénique; par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène ou un mélange de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%. Pour un tel pneumatique pour véhicule Poids-lourd, le composant A peut être aussi constitué, en tout ou partie, d'un autre élastomère fortement insaturé tel que, par exemple, un élastomère SBR.

Selon un autre mode de réalisation avantageux de l'invention, notamment lorsqu'elle s'applique à un flanc de pneumatique, est utilisé au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

II-2. Charge renforçante (composant B)

La charge blanche ou inorganique utilisée à titre de charge renforçante est associée à du noir de carbone.

De préférence, la charge inorganique renforçante constitue la majorité, c'est-à-dire plus de 50% en poids de la charge renforçante totale, plus préférentiellement plus de 80 % en poids de cette charge renforçante totale.

Dans la présente demande, on entend par "charge inorganique renforçante", de manière connue, une charge inorganique ou minérale, quelles que soient sa couleur et son origine (naturelle ou de synthèse), encore appelée charge

"blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est une charge minérale du type silice ($SiO_2$) ou alumine ($Al_2O_3$), ou un mélange de ces deux charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. Les silices précipitées hautement dispersibles (dites "HDS") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-735 088.

L'alumine renforçante utilisée préférentiellement est une alumine hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm, telle que décrite dans la demande EP-A-810 258 précitée. Comme exemples non limitatifs de telles alumines renforçantes, on peut citer notamment les alumines A125, CR125, D65CR de la société Baïkowski.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices et/ou d'alumines hautement dispersibles telles que décrites ci-dessus.

Dans le cas de bandes de roulement de pneumatiques, la charge inorganique renforçante utilisée, en particulier s'il s'agit de silice, a de préférence une surface BET comprise entre 60 et 250 $m^2/g$.

Un mode de réalisation avantageux de l'invention consiste à utiliser une charge inorganique renforçante, en particulier une silice, ayant une surface spécifique BET élevée, comprise dans un domaine de 130 à 230 $m^2/g$, en raison du haut pouvoir renforçant reconnu de telles charges.

On a toutefois constaté, et il s'agit là d'un autre mode préférentiel de réalisation de l'invention, que l'utilisation d'une charge inorganique renforçante, en particulier d'une silice, à surface spécifique BET inférieure à 130 $m^2/g$, dans un tel cas préférentiellement comprise entre 60 et 130 $m^2/g$, avait pour effet inattendu de renforcer encore l'effet technique premier de l'invention, à savoir l'augmentation de cinétique de vulcanisation des compositions de caoutchouc en présence de l'alkoxysilane spécifique (composant C) décrit ci-après.

La charge inorganique renforçante est utilisée en coupage (mélange) avec du noir de carbone. Comme noirs de carbone conviennent tous les noirs de carbone, notamment les noirs du type HAF, ISAF, SAF, conventionnellement utilisés dans les pneumatiques et en particulier dans les bandes de roulement des pneumatiques, comme par exemple les noirs de carbone de séries 100 à 300 ; à titre d'exemples non limitatifs de tels noirs, on peut citer les noirs N115, N134, N234, N330, N339, N347, N375.

La quantité de noir de carbone présente dans la charge renforçante totale peut varier dans de larges limites, cette quantité de noir de carbone, toutefois, étant préférentiellement inférieure à la quantité de charge inorganique renforçante présente dans la composition de caoutchouc.

Dans les pneumatiques et bandes de roulement selon l'invention, on préfère utiliser, en faible proportion, un noir de carbone en association avec la charge inorganique renforçante, à un taux préférentiel compris entre 2 et 20 pce, plus préférentiellement compris dans un domaine de 5 à 15 pce (parties en poids pour cent d'élastomère). Dans les intervalles indiqués, on a constaté qu'on pouvait bénéficier des propriétés colorantes (agent de pigmentation noire) et anti-UV des noirs de carbone, sans pénaliser par ailleurs les performances typiques apportées par la charge inorganique renforçante, à savoir faible hystérèse (résistance au roulement diminuée) et adhérence élevée sur sol mouillé, enneigé ou verglacé.

De manière préférentielle, le taux de charge renforçante totale (charge inorganique renforçante plus noir de carbone) est compris entre 10 et 200 pce, plus préférentiellement entre 20 et 150 pce, l'optimum étant différent selon les applications visées ; en effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de tels pneumatiques aptes à rouler à grande vitesse, la quantité de charge inorganique renforçante, en particulier s'il s'agit de silice, est de préférence comprise entre 30 et 140 pce, plus préférentiellement comprise dans un domaine de 50 à 120 pce.

Dans le présent exposé, la surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage: 1 heure à 160°C - domaine de pression relative *p*/*po* : 0.05 à 0.17]. La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge organique renforçante, notamment un noir de carbone, recouvert au moins en partie d'une couche inorganique, par exemple de silice, nécessitant quant à elle l'utilisation d'un agent de couplage pour établir la liaison avec l'élastomère (voir par exemple WO 96/37547, WO 97/42256, WO 98/42778, WO 99/28391).

<u>II-3. Agent de couplage (composant C)</u>

L'alkoxysilane (composant C) utilisé dans les pneumatiques conformes à l'invention répond donc à la formule générale III précitée.

On voit bien que pour assurer la liaison entre l'élastomère diénique et la charge inorganique renforçante, il comporte par molécule:

- d'un part, à titre de fonction "X", un groupe fonctionnel tétrasulfure ($S_x$) capable de former une liaison stable avec l'élastomère diénique;
- d'autre part, à titre de fonction "Y", un et un seul groupe éthoxyle (-OEt) par atome de silicium - fonction dite éthoxysilyle (≡Si-OEF) - lui permettant de se greffer sur la charge inorganique renforçante par l'intermédiaire de ses groupes hydroxyle de surface;
- les deux chaînes propylène assurant le lien entre le groupe tétrasulfure au centre de la molécule et les deux fonctions éthoxysilyle fixées à chaque extrémité de la molécule.

Par convention, dans la présente demande, on entend par "tétrasulfure" le tétrasulfure $S_4$ proprement dit ainsi que tout mélange de polysulfures $S_x$ (typiquement de $S_2$ à $S_8$) dont le nombre moyen d'atomes de S (noté x), par molécule d'alkoxysilane, est compris entre 3 et 5, de préférence dans un domaine de 3,5 à 4,5, cette valeur moyenne étant mesurée selon la méthode préconisée au paragraphe I-1.A), avec une précision (écart-type) de l'ordre de ± 0,1.

Dans la présente demande, il faut donc entendre plus précisément par x moyen compris entre 3 et 5, de préférence dans un domaine de 3,5 à 4,5, une valeur de x moyen comprise entre 3 ± 0,1 et 5 ± 0,1, de préférence dans un domaine de 3,5 ± 0,1 à 4,5 ± 0,1.

Pour une valeur moyenne x inférieure au minimum indiqué (x = 3) on a constaté une dégradation globale des propriétés, notamment en termes de renforcement (dureté Shore, modules MA100, MA300 et rapport MA300/MA100 plus faibles), des propriétés d'hystérèse également dégradées (valeurs PH et de $\tan(\delta)_{max}$ plus élevées), en d'autres termes un couplage moins efficace associé en outre à une pénalisation de la cinétique de vulcanisation (constante K plus faible).

Pour une valeur moyenne x supérieure au maximum indiqué (x = 5), on s'expose notamment à des risques de grillage et à une difficulté croissante lors de la mise en oeuvre des compositions (plasticité trop élevée lors du malaxage thermomécanique), en raison d'une trop forte réactivité du groupe polysulfure $S_x$.

Pour toutes les raisons indiquées ci-dessus, on préfère mettre en oeuvre l'invention avec un tétrasulfure pour lequel x est compris dans un domaine de 3,5 (±0,1) à 4,5 (±0,1), plus préférentiellement encore de 3,8 (±0,1) à 4,2 (±0,1), c'est-à-dire sensiblement égal à 4.

Les monoalkoxysilanes tétrasulfurés utilisés dans le cadre de la présente invention sont ceux de formule particulièrement (III) ci-après:

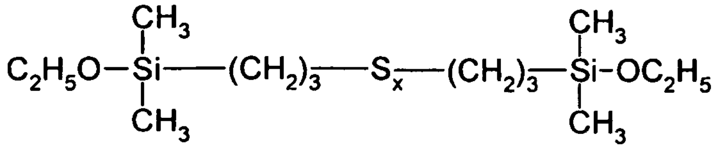

**(III) (en abrégé MESPT)**

dans laquelle le symbole x a la définition générale (x moyen compris entre 3 et 5), et en particulier les définitions préférentielles données supra (soit x moyen compris dans un domaine de 3,5 à 4,5, plus préférentiellement encore dans un domaine de 3,8 à 4,2).

Il s'agit du tétrasulfure de monoéthoxydiméthylsilylpropyle (en abrégé MESPT), de formule $[(C_2H_5O)(CH_3)_2Si(CH_2)_3S_2]_2$, homologue monoéthoxylé du TESPT précité.

Dans cette formule III, x est préférentiellement compris dans un domaine de 3,5 à 4,5, plus préférentiellement encore compris dans un intervalle de 3,8 à 4,2.

L'homme du métier saura ajuster cette teneur en composant C en fonction de l'application visée, notamment de la partie du pneumatique qui incorpore la composition de caoutchouc, de la nature de l'élastomère diénique et de la quantité de charge inorganique renforçante utilisée. Bien entendu, afin de réduire les coûts, il est souhaitable d'en utiliser le moins possible, c'est-à-dire le juste nécessaire pour un couplage suffisant entre l'élastomère diénique et la charge inorganique renforçante.

Son efficacité permet, dans un grand nombre de cas, d'utiliser le composant C à un taux préférentiel représentant entre 0,5% et 20% en poids par rapport à la quantité de charge inorganique renforçante ; des taux inférieurs à 15%, notamment inférieurs à 10%, sont plus particulièrement préférés.

De manière à tenir compte des différences de surface spécifique et de densité des charges inorganiques renforçantes susceptibles d'être utilisées, ainsi que des masses molaires des agents de couplage spécifiquement utilisés, il est préférable de déterminer le taux optimal d'agent de couplage (composant C) en moles par mètre carré de charge inorganique renforçante, pour chaque charge inorganique renforçante utilisée ; ce taux optimal est calculé à partir du rapport pondéral [agent de couplage/charge inorganique renforçante], de la surface BET de la charge et de la masse molaire de l'agent de couplage (notée *M* ci-après), selon la relation connue suivante:

$$(\text{moles/m}^2\ \text{charge inorganique}) = [\text{agent de couplage/charge inorganique}]\ (1/\text{BET})\ (1/M)$$

Ainsi, préférentiellement, la quantité d'agent de couplage utilisée dans les compositions conformes à l'invention est comprise entre $10^{-7}$ et $10^{-5}$ moles par $m^2$ de charge inorganique renforçante. Plus préférentiellement encore, la quantité d'agent de couplage est comprise entre $5.10^{-7}$ et $5.10^{-6}$ moles par $m^2$ de charge inorganique totale.

Compte tenu des quantités exprimées ci-dessus, de manière générale, la teneur en composant C est de préférence supérieure à 1 pce, plus préférentiellement comprise entre 2 et 20 pce. En dessous des minima indiqués l'effet risque d'être insuffisant, alors qu'au delà du maximum préconisé on n'observe généralement plus d'amélioration, alors que les coûts de la composition augmentent ; pour ces différentes raisons, cette teneur en composant C est plus préférentiellement encore comprise entre 2 et 10 pce.

L'homme du métier comprendra d'autre part que ce composant C pourrait être préalablement greffé sur la charge inorganique renforçante (via sa fonction éthoxysilyle), la charge inorganique ainsi "précouplée" pouvant ensuite être liée à l'élastomère diénique par l'intermédiaire de la fonction libre tétrasulfure.

Les composants C précédemment décrits, porteurs d'une seule fonction éthoxysilyle se sont révélés particulièrement efficaces à eux seuls, en particulier pour le problème premier résolu relatif à la cinétique de vulcanisation ; ils peuvent constituer avantageusement le seul agent de couplage présent dans les compositions élastomériques utilisées conformément à l'invention.

<u>II-4. Synthèse de l'agent de couplage (composant C)</u>

Les tétrasulfures précédemment décrits (formules III) peuvent être préparés selon divers procédés de synthèse, pour la plupart connus mis à part les réactifs de départ, parmi lesquels les méthodes préférentielles A, B, C et D ci-après décrites.

A) <u>méthode A:</u>

Les composés de formule (III) peuvent être obtenus par réaction directe d'un monoalkoxysilane halogéné de formule (V) avec un polysulfure métallique anhydre de formule (VI), en opérant à une température allant de -20°C à 90°C, en présence éventuellement d'un solvant organique polaire (ou non polaire) inerte, en appliquant le schéma de synthèse suivant :

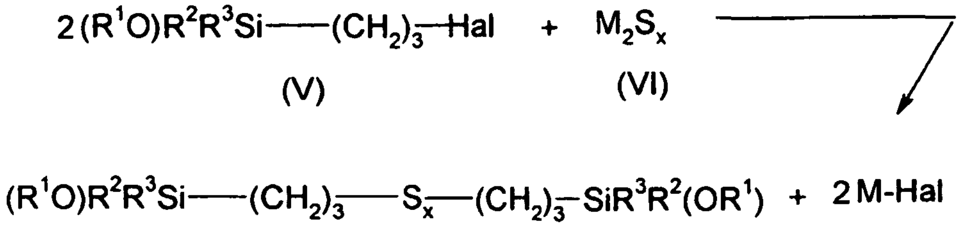

(V) (VI)

schéma 1

où :

- $R^1$ = éthyle , $R^2$ = $R^3$ = méthyle ;
- le symbole Hal représente un atome d'halogène choisi parmi les atomes de chlore, brome et iode, de préférence de chlore;
- le symbole M représente un métal alcalin ou alcalino-terreux, de préférence un métal alcalin choisi parmi le lithium, le sodium et le potassium.

En ce qui concerne la manière pratique détaillée de mettre en oeuvre la synthèse ci-dessus, on pourra se reporter par exemple au contenu de EP-A-848 006 qui illustre, au départ d'autres réactifs, des modes opératoires applicables à la conduite de cette méthode A.

Les silanes halogénés de formule (V) sont des produits commerciaux ou des produits facilement préparés à partir de produits commerciaux. Les polysulfures métalliques de formule (VI) peuvent être préparés, par exemple, par réaction d'un sulfure alcalin $M_2S$, contenant de l'eau de cristallisation, avec du soufre élémentaire en opérant à une température allant de 60°C à 300°C, sous vide et en absence d'un solvant organique.

B) méthode B:

Les composés de formule (III) peuvent être également obtenus par mise en ouvre des étapes (a) et (b) suivantes :

(a) on met en contact $H_2S$ avec un alkoxyde métallique de formule (VII), employé sous forme de solution, en opérant à une température allant de 25°C à 60°C, en présence éventuellement d'un solvant organique polaire (ou non polaire) inerte, en appliquant le schéma de synthèse suivant :

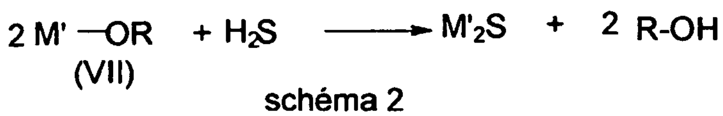

(VII)

schéma 2

où M' représente un métal alcalin, de préférence lithium, sodium ou potassium, et R représente l'éthyle ; puis

(b) on fait réagir un mélange à base de soufre élémentaire et de monoalkoxysilane halogéné de formule (V) définie ci-dessus dans la méthode A avec le produit de réaction de l'étape (a), en opérant à une température allant de 25°C à la température de reflux du milieu réactionnel.

En ce qui concerne la manière pratique de mettre en oeuvre les étapes (a) et (b) précitées, on pourra se reporter pour plus de détails au contenu de US-A-5489701 qui illustre, au départ d'autres réactifs, des modes opératoires applicables à la conduite de cette méthode B.

C) méthode C:

Les composés de formule (III) peuvent être également obtenus par mise en oeuvre des étapes (c) et (d) ci-après:

(c) on met en contact, à la température ambiante de l'ordre de 25°C, de l'ammoniac $NH_3$ ou une amine avec $H_2S$ et du soufre élémentaire ; puis

(d) on fait réagir le silane halogéné de formule (V) définie ci-dessus dans la méthode A avec le produit de réaction de l'étape (c), en opérant sous pression autogène à une température allant de 0°C à 175°C, en présence éventuellement d'un solvant organique polaire (ou non polaire) inerte,

en appliquant le schéma de synthèse suivant :

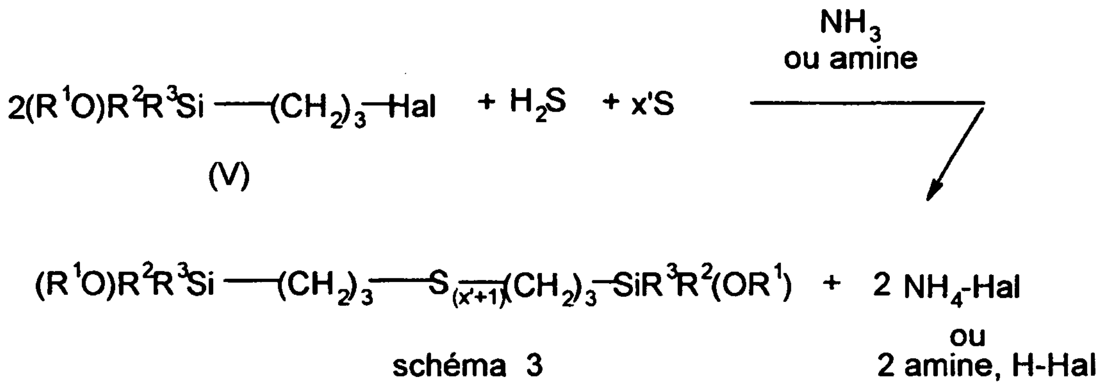


schéma 3

où les divers symboles $R^1$, $R^2$, $R^3$ et Hal sont tels que définis ci-dessus dans la méthode A ; x' est un nombre entier ou fractionnaire, compris entre 2 et 4, et de préférence dans un domaine de 2,5 à 3,5.

Pour la manière pratique détaillée de mettre en oeuvre les étapes (c) et (d) ci-dessus, on pourra se reporter au contenu de US-A-4 125 552 qui illustre, au départ d'autres réactifs, des modes opératoires applicables à la conduite de cette méthode C.

Il est à noter que, au cours de la réalisation de l'étape (c) précitée, il se forme *in situ* le composé de formule (VIII) $(NH_4)_2S_{(x'-1)}$ ou (IX) $(amine)_2S_{(x'+1)}$ qui est en fait le principe actif qui va donner naissance, par réaction avec le silane halogéné de formule (V), au monoalkoxysilane polysulfuré de formule (III).

D) <u>méthode D:</u>

Les composés de formule (III) peuvent être encore obtenus, et il s'agit là d'un mode de synthèse préférentiel, par mise en oeuvre des étapes (e) et (f) ci-après définies :

(e) on met en contact, à une température allant de 25°C à 80°C, en présence éventuellement d'un solvant organique polaire (ou non polaire) inerte, un alkoxyde métallique de formule (VII) définie ci-dessus dans la méthode B, employé sous forme de solution, avec dans un premier temps du soufre élémentaire et dans un second temps $H_2S$ ; puis

(f) on fait réagir le silane halogéné de formule (V) définie ci-dessus dans la méthode A avec le produit de réaction de l'étape (e), en opérant à une température allant de 40°C à 100°C, éventuellement sous pression autogène, en présence éventuellement d'un solvant organique polaire (ou non polaire) inerte ;

en appliquant le schéma de synthèse suivant :

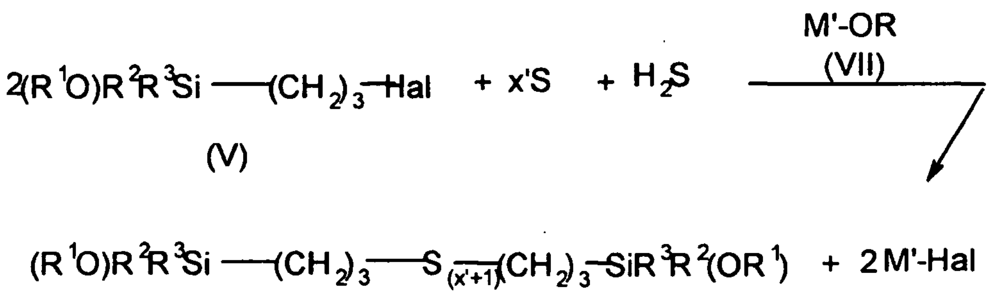


schéma 4

où les divers symboles $R^1$, $R^2$, $R^3$, Hal, x', M'et R sont tels que définis supra pour les méthodes A, B et C.

En ce qui concerne la manière pratique de mettre en oeuvre les étapes (e) et (f) précitées, on pourra se reporter pour plus de détails au contenu de US-A-4 125 552 qui illustre, au départ d'autres réactifs et en employant une base

aminée à la place d'une base alkoxyde métallique, des modes opératoires applicables à la conduite de cette méthode D. Il doit être noté que, au cours de la réalisation de l'étape (e) précitée, il se forme *in situ* le composé de formule (X) $M'_2S_{(x'+1)}$ qui est en fait le principe actif qui va donner naissance, par réaction avec le silane halogéné de formule (V), au monoalkoxysilane polysulfuré de formule (III).

De manière préférée, l'étape (e) précitée est conduite en préparant le mélange (alkoxyde métallique + soufre + $H_2S$) à une température allant de 20°C à 25°C, puis en chauffant ensuite le mélange à une température allant de 50°C à 80°C pendant une durée de temps allant de 30 minutes à 2 heures, de manière à compléter la formation du composé de formule (X) ; ensuite, le milieu réactionnel est refroidi jusqu'à une température allant de 15°C à 25°C avant de commencer le mode opératoire de l'étape (f).

A propos des quantités de réactifs, il doit y avoir au moins deux moles de silane halogéné (V) par mole de $H_2S$ et au moins deux moles de S par mole de $H_2S$. Le nombre d'atomes de soufre élémentaire $S_{(x'+1)}$ dans le groupe polysulfure est fonction du rapport molaire du S par rapport à $H_2S$. Par exemple, l'utilisation de trois moles de S (x' = 3) par mole de $H_2S$ donne le tétrasulfure (x'+1 = 4).

L'homme du métier comprendra aisément que les alkoxysilanes tétrasulfurés synthétisés selon les méthodes A à D précédemment décrites sont en fait des mélanges de polysulfures (typiquement $S_2$ à $S_8$), avec en conséquence une valeur moyenne des x qui est généralement différente de la valeur entière 4. Toutefois, seule est conforme à l'invention l'utilisation d'alkoxysilanes de formule (III), dont le x moyen est compris entre 3 ($\pm$0,1) et 5 ($\pm$0,1), de préférence compris dans un domaine de 3,5 ($\pm$0,1) à 4,5 ($\pm$0,1).

Concernant la distribution en polysulfures $S_x$ des alkoxysilanes tétrasulfurés ci-dessus, accessible selon l'analyse RMN décrite au paragraphe I-1.C), le taux molaire de ($S_3$+$S_4$) est de préférence supérieur à 40% (soit un taux de $S_2$+$S_{x\geq}$5 inférieur à 60%), plus préférentiellement supérieur à 50% (soit un taux de $S_2$+$S_{x\geq 5}$ inférieur à 50%), c'est-à-dire que dans ce dernier cas les polysulfures $S_3$ et $S_4$ représentent la majorité des polysulfures $S_x$ (en % molaire). Par ailleurs, le taux molaire de $S_2$ est de préférence inférieur à 30%, plus préférentiellement inférieur à 20%. Toutes ces valeurs limites sont données à la précision de mesure RMN près, avec une erreur absolue d'environ $\pm$ 1,5 (par exemple 20 $\pm$ 1,5 % pour le dernier taux indiqué).

11-5. Additifs divers

Bien entendu, conformément à l'invention, les compositions élastomériques comportent également tout ou partie des additifs usuels pour des compositions de caoutchouc diénique destinées à la fabrication de pneumatiques ou de bandes de roulement de pneumatiques, comme par exemple des huiles d'extension, des plastifiants, des agents de protection tels que cires anti-ozone, anti-ozonants chimiques, anti-oxydants, agents anti-fatigue, des promoteurs d'adhésion, des activateurs de couplage tels que décrits par exemple dans les demandes WO00/05300 et WO00/05301 précitées, des résines renforçantes telles que décrites dans WO02/10269, un système de réticulation à base soit de soufre, soit de donneurs de soufre et/ou de peroxyde et/ou de bismaléimides, des accélérateurs de vulcanisation, des activateurs de vulcanisation, etc. A la charge inorganique renforçante peut être également associée, si besoin est, une charge blanche conventionnelle peu ou non renforçante, par exemple des particules d'argiles, de bentonite, talc, craie, kaolin, etc.

Les compositions élastomériques peuvent également contenir, en complément des agents de couplage (composants C) précédemment décrits, des agents de recouvrement de la charge inorganique renforçante, comportant par exemple la seule fonction Y, ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des alkylalkoxysilanes, notamment des alkyltriéthoxysilanes, comme par exemple le 1-octyl-triéthoxysilane commercialisé par la société Degussa-Hüls sous la dénomination Dynasylan Octeo ou le 1-hexa-décyltriéthoxysilane commercialisé par la société Degussa-Hüls sous la dénomination Si216, des polyols, des polyéthers (par exemple des polyéthylèneglycols), des amines primaires, secondaires ou tertiaires (par exemple des trialcanol-amines), des polyorganosiloxanes. hydroxylés ou hydrolysables, par exemple des $\alpha,\omega$-dihydroxy-polyorganosiloxanes (notamment des $\alpha$, $\omega$-dihydroxy-polydiméthylsiloxanes).

II-6. Préparation des compositions de caoutchouc, bandes de roulement et pneumatiques

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée $T_{max}$) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation ; de telles phases

ont été décrites par exemple dans les demandes EP-A-501 227, EP-A-735 088, EP-A-810 258, WO00/05300, WO00/05301 ou WO02/10269 précitées.

Le procédé de fabrication des compositions selon l'invention est caractérisé en ce qu'au moins la charge inorganique renforçante (composant B) et l'agent de couplage (composant C) sont incorporés par malaxage à l'élastomère diénique (composant A) au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (composants A, B et C), puis dans un deuxième temps, par exemple après une à deux minutes de malaxage, les éventuels agents de recouvrement ou de mise en oeuvre complémentaires et autres additifs divers, à l'exception du système de vulcanisation ; lorsque la densité apparente de la charge inorganique renforçante est faible (cas général des silices), il peut être avantageux de fractionner son introduction en deux ou plusieurs parties. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme de plaques (épaisseur de 2 à 3 mm) ou de fines feuilles de caoutchouc pour la mesure de ses propriétés physiques ou mécaniques, notamment pour une caractérisation au laboratoire, ou encore extrudée pour former des profilés de caoutchouc utilisés directement, après découpage ou assemblage aux dimensions souhaitées, comme produit semi-fini pour pneumatique, notamment comme bandes de roulement, nappes d'armatures de sommet, flancs, nappes d'armatures de carcasse radiale, talons ou protecteurs.

En résumé, le procédé selon à l'invention, pour préparer une composition élastomérique vulcanisable au soufre à base d'une charge inorganique renforçante et destinée à la fabrication de pneumatiques ou de bandes de roulement de pneumatiques, ladite composition présentant une cinétique de vulcanisation accélérée, comporte les étapes suivantes:

- incorporer à un élastomère diénique, dans un mélangeur :
  - une charge inorganique renforçante;
  - un tétrasulfure de bis-alkoxysilane à titre d'agent de couplage (charge inorganique/élastomère diénique),
- en malaxant thermomécaniquement le tout, en une ou plusieurs fois, jusqu'à atteindre une température maximale comprise entre 110°C et 190°C;
- refroidir l'ensemble à une température inférieure à 100°C;
- incorporer ensuite un système de vulcanisation;
- malaxer le tout jusqu'à une température maximale inférieure à 110°C,

et il est caractérisé en ce que ledit tétrasulfure de bis-alkoxysilane répond à la formule (III) précitée.

Le procédé selon l'invention, pour préparer un pneumatique ou une bande de roulement de pneumatique à cinétique de vulcanisation accélérée, incorporant la composition élastomérique obtenue par le procédé ci-dessus, comporte donc comme étape supplémentaire celle consistant à calandrer ou extruder cette composition sous la forme d'une bande de roulement de pneumatique ou d'un profilé de caoutchouc incorporé comme produit semi-fini au pneumatique visé.

La vulcanisation (ou cuisson) du pneumatique ou de la bande de roulement, est conduite de manière connue à une température préférentiellement comprise entre 130°C et 200°C, sous pression, pendant un temps suffisant qui peut varier par exemple entre 5 et 90 min en fonction notamment de la température de cuisson, du système de vulcanisation adopté et de la cinétique de vulcanisation de la composition considérée.

Le système de réticulation proprement dit est préférentiellement à base de soufre et d'un accélérateur primaire de vulcanisation, en particulier un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en

particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

Il va de soi que l'invention concerne les pneumatiques précédemment décrits tant à l'état dit "cru" (i.e., avant cuisson) qu'à l'état dit "cuit" ou vulcanisé (i.e., après réticulation ou vulcanisation).

## III. EXEMPLES DE REALISATION DE L'INVENTION

### III-1. Synthèse de l'agent de couplage

A) synthèse du MESPT : $[(C_2H_5O)(CH_3)2Si(CH_2)_3S_2]_2$

Cet exemple décrit la préparation du tétrasulfure de bis-monoéthoxydiméthylsilylpropyle (en abrégé MESPT) de formule (III) en mettant en oeuvre la méthode de synthèse D décrite précédemment.

Dans un réacteur en verre de 3 litres double enveloppe qui est équipé d'un réfrigérant, d'une agitation mécanique (turbine de Rushton), d'un thermocouple, d'un tuyau d'admission de gaz (argon ou $H_2S$) et d'une arrivée pour la pompe péristaltique, 91,9 g d'éthanolate de sodium (1,352 mole, soit l'équivalent de 2 moles pour 1 mole de $H_2S$) en solution à 21% massique dans l'éthanol (438 g) et 250 ml de toluène sont introduits en pied sous courant d'argon.

L'ensemble est placé sous agitation (200-300 tours/min). Une masse de 65 g en soufre (2,031 moles, soit l'équivalent de 3 moles pour une mole de $H_2S$) est alors additionnée. Après une purge des circuits à l'argon, l'$H_2S$ (23 g, soit 0,676 mole) est introduit par bullage au moyen d'un tube plongeant, soit pendant 45 à 60 minutes. La solution passe d'une coloration orange avec des particules de couleur jaune-orange à une coloration brun foncé sans particule.

Sous courant d'argon, le mélange est chauffé à 60°C durant 1 heure de manière à compléter la conversion en $Na_2S_4$ anhydre. Le milieu réactionnel passe d'une couleur brun foncé à une couleur rouge-brun avec des particules brunes. Le milieu réactionnel est alors refroidi à l'aide d'un moyen de réfrigération (à 10-15°C) pour atteindre une température voisine de 20°C. Une masse de 244 g de γ-chloropropyléthoxydiméthylsilane (1,352 moles, soit l'équivalent de 2 moles pour une mole de $H_2S$) est ajoutée au moyen d'une pompe péristaltique (10 ml/min) sur 30 minutes. Le milieu réactionnel est ensuite chauffé à $75 \pm 2$°C durant 4h. En cours d'essai, le NaCl précipite. Au bout des 4 heures de chauffage, le milieu est refroidi à température ambiante (20-25°C). Il prend une couleur orange avec des particules jaunes.

Après dépotage du milieu réactionnel, il est filtré sur carton de cellulose sous pression d'azote dans un filtre en acier inoxydable. Le gâteau est lavé par 2 fois 100 ml de toluène. Le filtrat de couleur rouge brun est évaporé sous vide (pression maximum = $3\text{-}4.10^2$ Pa - température maximale = 70°C).

Une masse de 280 g de tétrasulfure de bis-monoéthoxydiméthylsilylpropyle (0,669 mole) est alors obtenue sous forme d'une huile de couleur jaune-orange.

Un contrôle par RMN-$^1$H, RMN-$^{29}$Si et RMN-$^{13}$C permet de vérifier que la structure obtenue est bien conforme avec le tétrasulfure de formule (III), soit (pour x = 4):

$$(C_2H_5O)(CH_3)_2Si\text{-}(CH_2)_3\text{-}S_4\text{-}(CH_2)_3 - Si(CH_3)_2(OC_2H_5)$$

- RMN- $^{29}$Si : 16.3 ppm (s, $Me_2(OEt)\mathbf{Si}$,)
- RMN-$^1$H : 0.0 à 0.1 ppm ( plusieurs s, $Si(C\mathbf{H_3})_2$, 12H), 0.66 ppm (m, $SiC\mathbf{H_2}$, 4H), 1.13 ppm (t, $CH_3CH_2O$, 6H), 1.75 ppm (m, $SiCH_2C\mathbf{H_2}$, 4H), 2.64 ppm (t, $C\mathbf{H_2}S_2$), 2.8 à 3.0 ppm (plusieurs t, $CH_2S_{x\geq3}$), 3:61 ppm (q, $C\mathbf{H_2}O$, 4H).
- RMN- $^{13}$C : -1,95 à -2,2 ppm (plusieurs $CH_3Si$), 15.4 à 15.6 ppm (plusieurs $C\mathbf{H_2}Si$), 18.5 ppm ($CH_3CH_2$), 22.5 à 23.5 ppm (plusieurs $SiCH_2\mathbf{C}H_2$), 42.36 ppm ($\mathbf{C}H_2S_2$), 42.08 ppm ($\mathbf{C}H_2S_3$), 42.59 ppm ($\mathbf{C}H_2S_4$), 42.85 à 43.5 ppm ($\mathbf{C}H_2S_{x\geq5}$), 58.2 ppm ($O\mathbf{C}H_2CH_3$).

Le nombre moyen x d'atomes de soufre par molécule de MESPT, calculé selon la méthode préconisée au paragraphe I-1.A), est égal à 3,9 (écart-type : $\pm$ 0,1), donc pratiquement égal à 4, avec $W_S$ = 30,1% ; $W_{Sel}$ = 0,75% et $W_{Si}$ = 13,1%.

La distribution des polysulfures $S_x$, accessible quant à elle par l'analyse RMN décrite au paragraphe I-1.C), est la suivante (en % molaire): $S_2 = 16 \pm 1{,}5$ ; $S_3 = 28 \pm 1{,}5$ ; $S_4 = 27 \pm 1{,}5$ et $S_{x\geq5} = 29 \pm 1{,}5$.

On constate donc que, conformément à un mode de réalisation préférentiel de l'invention, le taux molaire de $(S_3+S_4)$ est supérieur à 50%, les polysulfures $S_3$ et $S_4$ représentant ainsi la majorité des polysulfures $S_x$. Par ailleurs, le taux de $S_2$ est avantageusement inférieur à 20%.

On comprendra que des conditions de synthèse modifiées permettraient d'obtenir d'autres distributions de

polysulfures, avec des valeurs moyennes de x variables mais toujours comprises entre 3 (±0,1) et 5 (±0,1), de préférence dans un domaine de 3,5 (±0,1) à 4,5 (±0,1).

B) synthèse du MESPD: : $[(C_2H_5O)(CH_3)_2Si(CH_2)_3S]_2$

Cet exemple décrit la préparation du disulfure de bis-monoéthoxydiméthylsilylpropyle (en abrégé MESPD) en utilisant également la méthode de synthèse D précédente.

Dans un réacteur en verre de 5 litres double enveloppe qui est équipé d'un réfrigérant, d'une agitation mécanique (turbine de Rushton), d'un thermocouple, d'un tuyau d'admission de gaz (argon ou $H_2S$) et d'une arrivée pour la pompe péristaltique, 284,2 g d'éthanolate de sodium (4,18 moles, soit l'équivalent de 2 moles pour une mole de $H_2S$) en solution à 21 % massique dans l'éthanol (1353,3 g) sont introduits en pied sous courant d'argon.

L'ensemble est placé sous agitation (200-300 tours/min). Une masse de 66,87 g en soufre (2,09 moles, soit l'équivalent de 1 mole pour une mole de $H_2S$) est alors additionnée. Après une purge des circuits à l'argon, l'$H_2S$ (71,0 g, soit 2,09 moles) est introduit par bullage au moyen d'un tube plongeant, soit pendant 45 à 60 minutes. La solution devient homogène et prend une couleur marron-brune sans particule.

Sous courant d'argon, le mélange est chauffé à 60°C durant 1 heure de manière à compléter la conversion en $Na_2S_2$ anhydre. Un précipité jaune apparaît. Le milieu réactionnel est alors refroidi à l'aide d'un moyen de réfrigération (à 10-15°C) pour atteindre une température voisine de 20°C.

Une masse de 754,4 g de γ-chloropropyléthoxydiméthylsilane (4,18 moles, soit l'équivalent de 2 moles pour une mole de $H_2S$) est ajoutée au moyen d'une pompe péristaltique (10 ml/min) sur 30 minutes. Le milieu réactionnel est ensuite chauffé à 70°C durant 4h. En cours d'essai, le NaCl précipite. Au bout des 4 heures de chauffage, le milieu est refroidi à température ambiante (20-25°C). Il prend une couleur verte avec des particules jaunes.

Après dépotage, le milieu réactionnel est filtré sur carton de cellulose sous pression d'azote dans un filtre en acier inoxydable. Le filtrat de couleur orange est évaporé sous vide (pression maximum = $5.10^2$ Pa - température maximale = 40°C). Une masse de 739,74 g de disulfure de bis-monoéthoxydiméthylsilylpropyle (2,089 moles) est alors obtenue sous forme d'une huile de couleur kaki.

Un contrôle par RMN-$^1$H, RMN-$^{29}$Si et RMN-$^{13}$C permet de vérifier que la structure obtenue est bien.conforme à la formule du MESPT, à savoir (avec y égal à 2 environ):

$$(C_2H_5O)(CH_3)_2Si - (CH_2)_3 - Sy - (CH_2)_3 - Si(CH_3)_2(OC_2H_5)$$

- RMN- $^{29}$Si: 16.5 ppm (s, $Me_2(OEt)$**Si**,)
- RMN- $^1$H: 0.03 ppm (s, Si(C$\mathbf{H_3}$)$_2$ , 12H), 0.61 ppm (m, $SiCH_2$, 4H), 1.11 ppm (t, C$\mathbf{H_3}$$CH_2O$, 6H), 1.65 ppm (m, $SiCH_2C$$\mathbf{H_2}$, 4H), 2.62 ppm (t, C$\mathbf{H_2}$$S_2$), 2.80 ppm (t, C$\mathbf{H_2}$$S_3$), 3.58 ppm (q, C$\mathbf{H_2}$O, 4H).
- RMN-$^{13}$C: -1,8 à-2,5 ppm (plusieurs **C**$H_3Si$), 15.1 ppm (**C**$H_2Si$), 18.5 ppm (**C**$H_3CH_2O$), 22.8 à 23.2 ppm (plusieurs $SiCH_2$**C**$H_2$), 42.4 ppm (**C**$H_2S_2$), 42.1 ppm (**C**$H_2S_3$), 58.2 ppm (O**C**$H_2CH_3$).

Le nombre moyen (y) d'atomes de soufre par molécule de MESPD, calculé selon la méthode préconisée au paragraphe I-1.A), est pratiquement égal à 2 (précisément y = 1,9 ± 0,1; $W_s$ = , 15,7%; $W_{Sel}$ = 0% et $W_{Si}$ = 14,4%). S'agissant de la distribution molaire des polysulfures du MESPD, on trouve les valeurs suivantes (RMN-$^{13}$C) : $S_2$ = 94% et $S_3$ = 6% (seuls les deux premiers pics correspondant à $S_2$ et $S_3$ sont visibles).

III-2. Préparation des bandes de roulement de pneumatiques

On procède pour les essais qui suivent de la manière suivante: on introduit dans un mélangeur interne, rempli à 70% et dont la température initiale de cuve est d'environ 60°C, l'élastomère diénique (ou le mélange d'élastomères diéniques, le cas échéant), la charge renforçante, l'agent de couplage, puis, après une à deux minutes de malaxage, les divers autres ingrédients à l'exception du système de vulcanisation. On conduit alors un travail thermomécanique (phase non-productive) en une ou deux étapes (durée totale du malaxage égale par exemple à environ 7 min), jusqu'à atteindre une température maximale de "tombée" d'environ 160-165°C. On récupère le mélange ainsi obtenu, on le refroidit puis on ajoute le système de vulcanisation (soufre et accélérateur primaire sulfénamide) sur un mélangeur externe (homo-finisseur) à 30°C, en mélangeant le tout (phase productive) par exemple pendant 3 à 10 minutes.

Les compositions ainsi obtenues sont ensuite soit calandrées sous la forme de plaques (épaisseur de 2 à 3 mm) pour la mesure de leurs propriétés physiques ou mécaniques, soit extrudées directement sous la forme de bandes de roulement de pneumatiques.

III-3. Essais de caractérisation

A) Essai 1

Cet essai a pour but de démontrer les performances améliorées d'une composition élastomérique à base de MESPT, comparée à une composition témoin utilisant du TESPT.

On prépare pour cela deux compositions à base d'élastomères diéniques (coupage SSBR et BR) renforcées de silice, notées C-1 et C-2. Les deux compositions sont préparées dans un mélangeur de taille suffisante pour permettre là fabrication de bandes de roulement et des tests réels de roulage de pneumatiques comportant ces bandes de roulement.

Les deux compositions sont identiques, exception faite de l'agent de couplage utilisé:

- composition C-1 : TESPT (témoin);
- composition C-2 : MESPT (synthétisé selon paragraphe III-1.A).

Les deux alkoxysilanes tétrasulfurés sont utilisés à un taux sensiblement isomolaire en silicium (base x = 4), c'est-à-dire qu'on utilise, quelle que soit la composition testée, le même nombre de moles de fonctions "Y" ($Si\equiv(OEt)_a$ ; avec "a" égal à 1 ou 3) réactives vis-à-vis de la silice et de ses groupes hydroxyles de surface. Les deux alkoxysilanes sont utilisés à un taux inférieur à 8 pce, cette quantité représentant moins de 10% en poids par rapport à la quantité de charge inorganique renforçante. Le taux d'agent de couplage dans la composition C-2 représente environ $9.10^{-7}$ moles par mètre carré de charge inorganique (silice).

On rappelle que le TESPT, témoin de choix puisque constituant l'agent de couplage de référence pour les "Pneus Verts" (basse résistance au roulement), a pour formule développée (x voisin de 4):

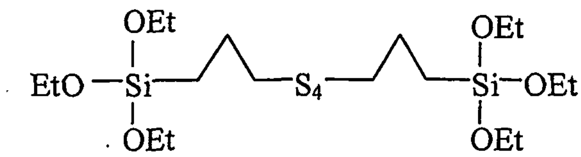

On utilise dans cet essai le TESPT commercialisé par la société Degussa sous la dénomination "Si69" (x moyen égal à 3,75 selon la fiche technique du fournisseur).

La structure ci-dessus est donc très proche de celle du MESPT de formule (III):

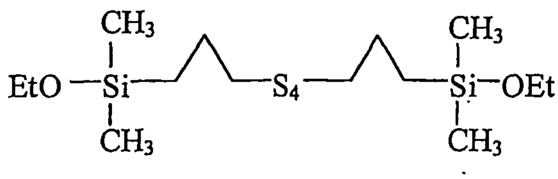

ce dernier ne s'en différenciant que par la présence d'un seul groupe éthoxyle (et deux groupes méthyle) en lieu et place des trois groupes éthoxyles usuels.

En d'autres termes, par rapport à la composition témoin, trois fois moins de groupes éthoxyle sont utilisés dans la composition selon l'invention.

Les tableaux 1 et 2 donnent la formulation des deux compositions (tableau 1 - taux des différents produits exprimés en pce), leurs propriétés avant et après cuisson (30 min à 150°C); le système de vulcanisation est constitué par soufre et sulfénamide.

La figure 1 annexée reproduit les courbes de module (en MPa) en fonction de l'allongement (en %) ; ces courbes sont notées C1 et C2 et correspondent respectivement aux compositions C-1 et C-2.

L'examen des différents résultats du tableau 2 conduit aux observations suivantes:

- si les valeurs de plasticité Mooney restent certes relativement basses dans les deux cas, on note toutefois un résultat meilleur (viscosité abaissée de 8%) sur la composition selon l'invention C-2, indicateur d'une aptitude améliorée à la mise en oeuvre à l'état cru;
- la composition C-2 montre par ailleurs une sécurité au grillage légèrement supérieure (T5 augmentée de 3 min), le temps T5 restant par ailleurs suffisamment court (inférieur. à 25 min) pour satisfaire aux exigences industrielles

propres à la fabrication de compositions pour pneumatiques ou bandes de roulement de pneumatique;

- les valeurs BR ("Bound rubber") sont elles aussi supérieures (de 7% environ) à celles du témoin, illustration d'un couplage de qualité;
- ce dernier constat est confirmé après cuisson: la composition C-2, comparée au témoin C-1, présente des valeurs de dureté Shore d'une part, de modules sous forte déformation (MA100, MA300) et de rapport (M300/M100) d'autre part, qui sont nettement supérieures, autant d'indicateurs clairs pour l'homme du métier d'un renforcement amélioré;
- la figure 1 confirme bien les observations précédentes: courbe C2 située au-dessus de la courbe C1, en particulier pour les grands allongements (100% et plus), ce qui est représentatif d'un haut niveau de renforcement et donc, a priori, d'une excellente aptitude à résister à l'usure pour une bande de roulement incorporant la composition selon l'invention;
- la composition C-2 se distingue en outre par des propriétés d'hystérèse très sensiblement améliorées, comme illustré par une valeur significativement plus basse (moins 10-15%) des pertes PH et de $\tan(\delta)_{max}$, ce qui laisse déjà entrevoir une résistance au roulement diminuée pour une bande de roulement formée de la composition selon l'invention.

Enfin, si les résultats enregistrés ci-dessus constituent déjà un résultat inattendu en termes de mise en oeuvre à l'état cru, de renforcement et d'hystérèse, autant de caractéristiques améliorées par rapport au témoin TESPT, on note par ailleurs des propriétés rhéométriques très sensiblement modifiées par rapport au témoin:

- constante de vitesse de conversion K plus de deux fois supérieure (multipliée par 2,17) dans le cas du MESPT (0,446 $min^{-1}$ au lieu de 0,206 $min^{-1}$), avantageusement proche des valeurs K usuelles pour des compositions conventionnelles chargées de noir de carbone, à formulation de caoutchouterie "équivalente" c'est-à-dire typique d'une bande de roulement de pneumatique tourisme;
- délai d'induction $t_i$ plus long (10 min au lieu de 6 min) et couple maximum atteint dans un temps (voir $t_{90}$ ou $t_{99}$) nettement plus court, la durée totale de vulcanisation ($t_{99}$-$t_i$) étant réduite de moitié par rapport au témoin.

En d'autres termes, de manière avantageuse, la cuisson de la composition selon l'invention peut être réalisée en un temps nettement plus court, sans pénaliser, au contraire en favorisant ici l'étape de mise en oeuvre initiale grâce à une plasticité réduite, un délai d'induction plus long et une sécurité au grillage (T5) augmentée.

Une telle différence de réponse entre le MESPT et la référence TESPT justifie que ces premiers résultats soient maintenant confrontés à des tests réels de roulage de bandes de roulement, comme exposé dans l'essai 2 qui suit.

B) Essai 2

Les compositions C-1 et C-2 précédemment décrites sont utilisées dans cet essai comme bandes de roulement de pneumatiques tourisme à carcasse radiale, de dimension 175/70 R14 (indice de vitesse T), conventionnellement fabriqués et en tous points identiques hormis la composition de caoutchouc constitutive de la bande de roulement: composition C-1 pour les pneus témoins (notés P-1) et composition C-2 pour les pneus de l'invention (notés P-2).

Les résultats de roulage obtenus sont résumés dans le tableau 3.

On constate tout d'abord que la résistance au roulement des pneumatiques P-2 conformes à l'invention est abaissée de manière significative, de 4% environ par rapport aux "Pneus Verts" témoins P-1, ce qui équivaut à un gain supplémentaire en consommation de carburant pour un véhicule de tourisme équipé de pneumatiques conformes à l'invention.

On soumet d'autre part les pneumatiques ainsi préparés à un roulage sur route, sur un véhicule tourisme de marque Citroën Xsara, pour détermination de la résistance à l'usure. De manière connue de l'homme du métier, la résistance à l'usure de la composition de caoutchouc, au cours du roulage du pneumatique, est directement corrélée au niveau de renforcement apporté par la charge renforçante et son agent de couplage associé, c'est-à-dire à la qualité de couplage (charge/élastomère) obtenu. En d'autres termes, la mesure de la résistance à l'usure est un excellent indicateur, sinon le meilleur puisque évalué sur le produit manufacturé final, de la performance de l'agent de couplage utilisé.

On constate après roulage que le pneumatique conforme à l'invention montre une performance en résistance à l'usure au moins identique sinon légèrement supérieure (gain constaté de 2% environ) à celle du pneumatique témoin.

On améliore ainsi, sur les bandes de roulement de l'invention, le compromis résistance au roulement et résistance à l'usure par rapport à la référence que constituent les bandes de roulement des pneus témoins P-1, comme le laissaient présager les résultats de caoutchouterie de l'essai 1 précédent, tout en bénéficiant pour ces bandes de roulement (et donc pour les pneumatiques qui en sont équipés) d'une aptitude à la cuisson nettement améliorée.

C) Essai 3

Cet essai démontre la supériorité du MESPT par rapport à deux autres alkoxysilanes polysulfurés (disulfurés) connus, en l'occurrence le disulfure de triéthoxysilylpropyle (en abrégé TESPD) et le disulfure de monoéthoxydiméthylsilylpropyle (en abrégé MESPD).

Le premier disulfure (TESPD), de formule $[(C_2H_5O)_3Si(CH_2)_3S]_2$, est bien connu ; il est commercialisé par la société Degussa sous les dénominations Si266 ou Si75 (dans le second cas, sous forme d'un mélange de disulfure (à 75% en poids) et de polysulfures), ou encore par la société Osi Specialties sous la dénomination Silquest A1589.

Homologue disulfure du TESPT, ce TESPD a donc pour formule développée (x voisin de 2):

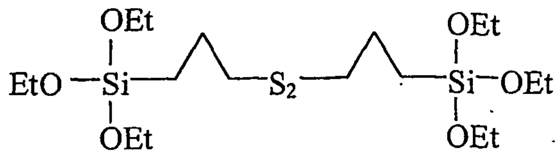

On utilise dans cet essai le TESPD commercialisé par la société Degussa sous la dénomination "Si75" (x moyen égal à 2,35 selon la fiche technique du fournisseur).

Le second disulfure (MESPD), de formule $[(C_2HsO)(CH_3)_2Si(CH_2)_3S]_2$, a été décrit dans la demande de brevet EP-A-1 043 357 et exemplifié dans des compositions de caoutchouc destinées à la fabrication de pneumatiques. Dans cette demande, le MESPD est présenté comme un remplaçant potentiel du TESPD, utilisable sans dégradation des propriétés mécaniques (et donc du niveau de renforcement), avantageux du point de vue de l'environnement en raison d'un nombre de fonctions éthoxy réduites (par atome de silicium, une seule au lieu de trois) et par voie de conséquence d'un dégagement moindre d'éthanol lors de la mise en oeuvre des compositions de caoutchouc (problème connu des VOC - *"volatile Organic Compounds").*

Homologue disulfure du MESPT, ce MESPD a pour formule développée (x voisin de 2):

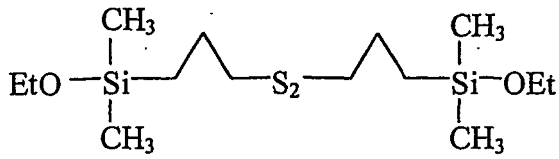

Ce produit n'étant pas disponible commercialement, on utilise dans cet essai le composé MESPD synthétisé selon le paragraphe III-1.B).

On note que les deux structures ci-dessus (TESPD et MESPD) sont d'une part très proches l'une de l'autre, d'autre part voisines de celle du MESPT de formule (III), ce dernier ne se différenciant notamment du MESPD que par la présence d'un groupe tétrasulfure $S_4$ en lieu et place du groupe disulfure $S_2$.

On prépare pour cet essai trois compositions à base d'élastomères diéniques (coupage SSBR et BR) renforcées de silice, notées C-3 à C-5, ces trois compositions étant destinées à des bandes de roulement pour pneumatiques tourisme. Ces trois compositions sont identiques, exception faite de l'agent de couplage utilisé :

- composition C-3 : MESPT (invention);
- composition C-4 : TESPD (témoin);
- composition C-5 : MESPD (témoin).

Comme précédemment, les trois alkoxysilanes sont utilisés à un taux sensiblement isomolaire en silicium, leur taux inférieur à 6 pce représentant avantageusement moins de 8% en poids par rapport à la quantité de charge inorganique renforçante. Le taux de MESPT dans la composition C-3 représente environ $9.10^{-7}$ moles par mètre carré de charge inorganique (silice).

Les tableaux 4 et 5 donnent la formulation des trois compositions (tableau 4 - taux des différents produits exprimés en pce), leurs propriétés avant et après cuisson (30 min à 150°C); le système de vulcanisation est constitué par soufre et sulfénamide. La figure 2 annexée reproduit les courbes de module en fonction de l'allongement, ces courbes étant notées C3 à C5 et correspondant respectivement aux compositions C-3 à C-5.

L'examen des différents résultats du tableau 5 montre clairement que la composition selon l'invention C-3, à base de MESPT, présente le meilleur compromis de propriétés comparée aux deux compositions témoins C-4 et C-5,

tant avant qu'après cuisson, avec:

- une viscosité à l'état cru plus basse que celle de la composition C-4 (TESPD), sensiblement identique à celle de la composition C-5 (MESPD);
- un temps T5 nettement inférieur, en particulier par rapport à la composition C-5 (MESPD), tout en étant suffisamment long (20 min) pour offrir une marge de sécurité appropriée vis-à-vis du problème de grillage;
- la constante de vitesse de conversion K de loin la plus élevée (0,462 $min^{-1}$), couplée à un délai d'induction $t_i$ relativement long (10 min) et aux durées de vulcanisation les plus courtes (15 et 20 min pour atteindre respectivement 90% et 99% du couple maximum), autant de caractéristiques particulièrement favorables aux conditions industrielles de cuisson des pneumatiques ou de leurs bandes de roulement;
- une dureté Shore supérieure, ce qui, pour une bande de roulement, est plutôt favorable au comportement routier du pneumatique sur sol sec;
- des valeurs de modules sous forte déformation (MA100 et MA300) et un rapport (MA300/MA100) nettement supérieurs, autant d'indicateurs clairs pour l'homme du métier d'un renforcement meilleur;
- enfin, les propriétés d'hystérèse de loin les plus avantageuses, comme illustré par des valeurs nettement plus basses de PH et $\tan(\delta)_{max}$, synonymes d'une résistance au roulement abaissée.

Les courbes de la figure 2 annexée confirment bien, si besoin était, la supériorité de la composition selon l'invention: courbe C3 située bien au-dessus des courbes C4 et C5 pour les grands allongements (100% et plus), d'autant plus que l'allongement augmente, ce qui est représentatif de manière connue d'un renforcement supérieur, et donc d'une aptitude supérieure de la composition C-3 à résister à l'usure.

En résumé, l'agent de couplage MESPT, dont la supériorité a déjà été démontrée par rapport au témoin TESPT (essais 1 et 2 précédents), se révèle ici très nettement supérieur aux deux autres éthoxysilanes polysulfurés (disulfurés) ici testés, à savoir TESPD et MESPD.

D) Essai 4

Cet essai confirme la supériorité du MESPT par rapport au témoin MESPD dans une matrice élastomérique différente des précédentes, comportant à titre de charge renforçante un coupage (proche de 50/50 en poids) de noir de carbone (N234) et de silice, le taux de charge renforçante totale étant de 85 pce.

Les deux compositions de caoutchouc préparées pour cet essai, destinées à des bandes de roulement de pneumatiques tourisme, sont identiques exception faite de l'agent de couplage utilisé :

- composition C-6 : MESPT (invention);
- composition C-7 : MESPD (témoin).

Les deux monoéthoxysilanes sont utilisés à un taux inférieur à 3 pce (taux sensiblement isomolaire en silicium), cette quantité représentant moins de 8% en poids par rapport à la quantité de charge inorganique renforçante. Le taux de MESPT dans la composition C-6 représente environ $9.10^{-7}$ moles par mètre carré de charge inorganique.

Les tableaux 6 et 7 donnent la formulation des deux compositions et leurs propriétés après cuisson (30 min à 150°C).

Les résultats du tableau 7 confirment une nouvelle fois la supériorité du monoéthoxysilane tétrasulfuré (MESPT) comparé au monoéthoxysilane disulfuré (MESPD), avec notamment:

- une dureté Shore supérieure;
- des modules MA100, MA300 et un rapport MA300/MA100 nettement supérieurs, indicateurs d'un niveau de renforcement plus élevé (couplage plus efficace), corrélativement d'une meilleure résistance à l'usure pour une bande de roulement incorporant la composition selon l'invention;
- enfin, une hystérèse améliorée (PH et $\tan(\delta)_{max}$ plus faibles), en d'autres termes une moindre résistance au roulement, synonyme d'une consommation de carburant réduite.

Quant aux cinétiques de vulcanisation des compositions testées, il s'est avéré dans cet essai qu'elles recouvraient dans les deux cas, en raison d'un effet accélérateur connu du noir de carbone, des valeurs identiques à celles usuellement observées sur des compositions conventionnelles chargées exclusivement de noir de carbone (constante K comprise dans un domaine d'environ 0,45 à 0,55 $min^{-1}$), bien entendu à formulation de caoutchouterie "équivalente" (c'est-à-dire typique d'une bande de roulement de pneumatique tourisme); toutefois, la composition C-6 selon l'invention a montré encore une supériorité par rapport à la composition témoin C-7.

E) Essai 5

On prépare dans cet essai deux compositions similaires à celles de l'essai 1 précédent, notées C-8 et C-9, à la différence près que le mélangeur utilisé est cette fois un mélangeur de taille industrielle.
Les deux compositions sont identiques, exception faite de l'agent de couplage utilisé :

- composition C-8 : TESPT (témoin);
- composition C-9 : MESPT (invention).

Le MESPT est synthétisé selon les indications du paragraphe III-1.A) mais en plus grande quantité. Les taux des différents constituants utilisés, en particulier élastomère, charge inorganique renforçante et agent de couplage sont les mêmes que pour l'essai 1 précédent. Les tableaux 8 et 9 donnent la formulation des deux compositions, leurs propriétés avant et après cuisson (30 min à 150°C).
L'examen des différents résultats du tableau 9 confirme les performances améliorées de la composition à base de MESPT, comparée à la composition témoin utilisant du TESPT, dans des conditions de préparation industrielles; avec notamment pour la composition conforme à l'invention :

- une constante de vitesse de conversion K multipliée par deux ;
- avec un couple maximum atteint dans un temps (voir $t_{90}$) nettement plus court, la durée totale de vulcanisation ($t_{90}$-$t_i$) étant réduite de moitié par rapport au témoin ;
- des valeurs de modules sous forte déformation MA100, MA300 et de rapport MA300/MA100 plus élevées (renforcement supérieur) ;
- des propriétés d'hystérèse améliorées, comme illustré par des valeurs significativement plus basses (moins 10 à 15%) des pertes PH et de $tan(\delta)_{max}$, ce qui laisse déjà entrevoir une résistance au roulement diminuée,

En d'autres termes, la cuisson de la composition selon l'invention peut être réalisée en un temps nettement plus court, sans pénaliser, voire même en améliorant les performances de renforcement et d'hystérèse.
On confirme ainsi, cette fois à l'échelle industrielle, la supériorité de l'invention par rapport à la solution témoin.

F) Essai 6

Les compositions C-8 et C-9 précédentes sont utilisées dans cet essai comme bandes de roulement de pneumatiques tourisme à carcasse radiale, de dimension 195/65 R15 (indice de vitesse H), conventionnellement fabriqués et en tous points identiques hormis la composition de caoutchouc constitutive de la bande de roulement : composition C-8 pour les pneus témoins (notés P-8), composition C-9 pour les pneus de l'invention (notés P-9).
Les pneumatiques sont d'abord testés sur machine pour la détermination de leur résistance au roulement et de leur poussée de dérive, puis montés sur véhicule pour la suite des tests.
Puis ils sont soumis à un roulage sur route, sur un véhicule tourisme de marque Peugeot modèle "406", pour détermination de leur résistance à l'usure.
Enfin, ils sont montés sur un autre véhicule tourisme (marque Renault modèle "Laguna" - pressions nominales à l'avant et à l'arrière) pour être soumis aux tests de freinage et d'adhérence décrits au paragraphe I-3, selon les conditions particulières qui suivent:

- freinage (sur sol sec ou humide): les pneumatiques à tester sont montés à l'avant du véhicule;
- roulage sur circuit humide virageux: les pneumatiques à tester sont montés à l'avant et à l'arrière du véhicule.

L'ensemble des tests et résultats de roulage est résumé dans le tableau 10. On note que les pneumatiques P-9 conformes à l'invention, comparés aux pneumatiques témoins, présentent des performances au moins identiques, sinon supérieures en ce qui concerne :

- la résistance au roulement (gain de 2%);
- le freinage sur sol sec (gain de 3%);
- le comportement sur circuit humide et virageux en conditions de vitesse limite, illustré par le temps minimal pour parcourir un tour de circuit (gain significatif de 0,5 s);
- la diminution de 1% en ce qui concerne le freinage sur sol humide n'étant pas jugée significative compte tenu de la précision du test.

En résumé, la composition C-9 de l'invention, comparée à la composition témoin C-8, présente.des propriétés

de cuisson améliorées tout en offrant aux pneumatiques un compromis de propriétés de roulage qui est globalement lui aussi amélioré. Ceci confirme largement les résultats de l'essai 2 précédent.

G) Essai 7

On prépare dans cet essai, comme indiqué précédemment pour l'essai 5 (i.e., en conditions industrielles), deux nouvelles compositions notées C-10 et C-11 identiques à celles de l'essai 5 précédent , à la différence près que l'élastomère diénique utilisé est ici un coupage de deux SBR différents.

Les deux compositions sont identiques, exception faite de l'agent de couplage utilisé :

- composition C-10 : TESPT (témoin);
- composition C-11 : MESPT (invention).

Les tableaux 11 et 12 donnent la formulation des deux compositions, leurs propriétés avant et après cuisson (30 min à 150°C).

L'examen des différents résultats du tableau 12 confirme une nouvelle fois les performances améliorées de la composition à base de MESPT, comparée à la composition témoin utilisant du TESPT, avec notamment pour la composition C-11 conforme à l'invention :

- une constante de vitesse de conversion K deux fois supérieure (multipliée par 2,08) ;
- avec un couple maximum atteint dans un temps (voir $t_{90}$) plus court, la durée totale de vulcanisation ($t_{90}$-$t_i$) étant là encore réduite de moitié par rapport au témoin ;
- des valeurs de modules sous forte déformation MA100, MA300 et de rapport MA300/MA100 plus élevées (renforcement supérieur) ;
- des propriétés d'hystérèse améliorées, comme illustré par des valeurs significativement plus basses (moins 12 à 16%) des pertes PH et de $\tan(\delta)_{max}$, favorables à la résistance au roulement.

Les compositions C-10 et C-11 sont ensuite testées comme bandes de roulement de pneumatiques tourisme à carcasse radiale, conventionnellement fabriqués et en tous points identiques hormis la composition de caoutchouc constitutive de la bande de roulement : composition C-10 pour les pneus témoins (notés P-10), composition C-11 pour les pneus de l'invention (notés P- 11).

Tous les tests sont conduits conformément aux indications détaillées de l'essai 6 précédent. L'ensemble des résultats de roulage est résumé dans le tableau 13. On note que les pneumatiques P-11 conformes à l'invention présentent une performance au moins identique, sinon légèrement supérieure en ce qui concerne notamment le comportement sur circuit humide et virageux en conditions de vitesse limite, illustré par le temps minimal pour parcourir un tour de circuit (gain significatif de 0,5 s).

H) *Essai 8*

Cet essai confirme cette fois la supériorité du MESPT par rapport au témoin MESPD, dans deux compositions de caoutchouc similaires aux compositions C-3 et C-5 de l'essai 3 précédent, à la différence près que les deux compositions du présent essai sont préparées en grande quantité, en mélangeur industriel, comme pour les essais 5 et 7 qui précédent.

Les deux compositions de caoutchouc, destinées à des bandes de roulement de pneumatiques tourisme, sont identiques exception faite de l'agent de couplage utilisé :

- composition C-12 : MESPT (invention);
- composition C-13 : MESPD (témoin):

Les tableaux 14 et 15 donnent la formulation des deux compositions et leurs propriétés après cuisson (30 min à 150°C).

Les résultats du tableau 15 confirment, en conditions industrielles, la supériorité du monoéthoxysilane tétrasulfuré (MESPT) comparé au monoéthoxysilane disulfuré (MESPD), avec notamment:

- une constante de vitesse de conversion K nettement supérieure, une durée totale de vulcanisation ($t_{90}$-$t_i$) réduite, une valeur BR ("Bound rubber") supérieure;
- après cuisson, une dureté Shore, des modules MA100, MA300 et un rapport MA300/MA100 plus élevés, mais aussi une hystérèse améliorée (PH et $\tan(\delta)_{max}$ nettement plus basses, synonyme d'une résistance au roulement améliorée).

Des mesures de résistance au roulement conduites conformément au paragraphe I-3-A) ont en effet montré un gain significatif, de l'ordre de 5%, dans le cas de l'invention, comparativement à la solution témoin.

I) Essai 9

Cet essai confirme la supériorité du MESPT par rapport au témoin TESPT, dans deux nouvelles compositions de caoutchouc, préparées selon des conditions industrielles comme pour les essais 5 à 8 qui précèdent. Ces compositions se caractérisent par le fait qu'elles sont renforcées par une silice à plus basse surface spécifique BET (environ 110 $m^2/g$), comparée à celle des essais précédents.

Les deux compositions de caoutchouc, destinées à des bandes de roulement de pneumatiques tourisme, sont identiques exception faite de l'agent de couplage utilisé :

- composition C-14 : TESPT (témoin);
- composition C-15 : MESPT (invention).

Les tableaux 16 et 17 donnent la formulation des deux compositions et leurs propriétés après cuisson (30 min à 150°C).

Les résultats du tableau 17 démontrent clairement, en présence d'une charge inorganique renforçante différente, la supériorité du monoéthoxysilane comparé au triéthoxysilarie, avec notamment :

- une constante de vitesse de conversion K très supérieure (multipliée par 2,6),
- un couple maximum atteint dans un temps (voir $t_{90}$) nettement plus court, la durée totale de vulcanisation ($t_{90}$-$t_i$) étant réduite de moitié par rapport au témoin ;
- une dureté Shore légèrement supérieure;
- des modules MA100 et MA300 supérieurs,
- une hystérèse améliorée (PH et tan( $\delta)_{max}$ plus faibles).

On constate en particulier que, de manière inattendue, en présence d'une charge inorganique renforçante telle que silice à plus basse surface spécifique BET, inférieure à 130 $m^2/g$, le remplacement du TESPT conventionnel par le MESPT s'accompagne d'une augmentation de la vitesse de conversion K encore plus importante que celle observée lors des essais précédents pour une silice renforçante de plus haute surface spécifique (environ 160 $m^2/g$).

J) Essai 10

Ce dernier essai confirme enfin la supériorité du MESPT par rapport au témoin TESPT, dans deux nouvelles compositions de caoutchouc, cette fois à base de caoutchouc naturel, destinées à des bandes de roulement de pneumatiques Poids-lourd.

Ces deux compositions sont identiques exception faite de l'agent de couplage utilisé :

- composition C-16 : TESPT (témoin);
- composition C-17 : MESPT (invention).

Les tableaux 18 et 19 donnent la formulation des deux compositions et leurs propriétés après cuisson (30 min à 150°C). Les résultats du tableau 19 confirment une nouvelle fois, en présence d'un élastomère diénique de nature différente, la supériorité de l'agent de couplage monoéthoxysilane, comparé à l'agent de couplage de référence triéthoxysilane, avec notamment:

- une constante de vitesse de conversion K supérieure;
- un couple maximum atteint dans un temps (voir $t_{90}$) plus court, une durée totale de vulcanisation ($t_{90}$-$t_i$) réduite;
- une dureté Shore supérieure;
- des modules MA100 et MA300 supérieurs;
- une hystérèse améliorée (PH et $\tan(\delta)_{max}$ plus faibles).

En résumé, tous les résultats des essais précédents illustrent clairement un comportement global amélioré des compositions, pneumatiques ou bandes de roulement à base d'une charge inorganique renforçante et de MESPT à titre d'agent de couplage, quelle que soit la nature de l'élastomère diénique ou de la charge inorganique renforçante

utilisés.

Non seulement est observée une haute qualité de couplage entre charge inorganique renforçante et élastomère diénique, au moins égale sinon supérieure à celle jusqu'ici disponible avec l'agent de couplage de référence TESPT, comme illustré dans de nombreux exemples par des valeurs améliorées de renforcement et d'hystérèse.

Mais encore et surtout, de manière imprévisible, sont obtenues des propriétés rhéométriques très nettement améliorées, en particulier une cinétique de vulcanisation sensiblement ramenée au niveau connu pour des compositions chargées conventionnellement de noir de carbone.

Ce résultat est d'autant plus inattendu pour l'homme du métier que l'état de la technique récent l'incitait plutôt à s'orienter vers des alkoxysilanes du type disulfurés tels que TESPD ou MESPD, en raison des difficultés connues de mise en oeuvre à l'état cru, liées aux risques de grillage, des compositions de caoutchouc utilisant les versions tétrasulfurées, telles que le TESPT, de ces alkoxysilanes (voir notamment EP-A-732 362 ou US-A-5 580 919, EP-A-773 224 ou US-A-5 663 395, EP-A-785 206 ou US-A-5 663 358, EP-A-895 996 ou US-A-5 892 085, ou encore la demande EP-A-1 043 357 précitée).

L'invention trouve des applications particulièrement avantageuses dans les "Pneus Verts" à faible consommation d'énergie et dans leurs bandes de roulement, présentant à la fois une faible hystérèse (basse résistance au roulement), une haute résistance à l'usure, ainsi que des propriétés d'adhérence élevées sur sol mouillé, enneigé ou verglacé, en particulier lorsque ces pneumatiques et bandes de roulement sont destinés à des véhicules tourisme, motos ou véhicules industriels du type Poids-lourd.

**Tableau 1**

| Composition N°: | C-1 | C-2 |
|---|---|---|
| SBR (1) | 82.5 | 82.5 |
| BR (2) | 30 | 30 |
| silice (3) | 80 | 80 |
| noir de carbone (4) | 6 | 6 |
| huile aromatique (5) | 20.5 | 20.5 |
| TESPT (6) | 6.4 | - |
| MESPT (7) | - | 5.0 |
| DPG (8) | 1.5 | 1.5 |
| ZnO | 2.5 | 2.5 |
| acide stéarique | 2 | 2 |
| paraffine (9) | 1.5 | 1.5 |
| antioxydant (10) | 1.9 | 1.9 |
| soufre | 1.1 | 1.1 |

(suite)

| Composition N°: | C-1 | C-2 |
|---|---|---|
| accélérateur (11) | 2 | 2 |

(1) SSBR avec 59,5% de motifs polybutadiène 1-2 ; 26,5% de styrène ; Tg = -29°C ; 70 pce SBR sec étendu avec 18% en poids d'huile aromatique (soit un total de SSBR + huile égal à 82,5 pce);
(2) BR avec 4,3 % de 1-2 ; 2,7% de trans ; 93% de cis 1-4 (Tg = -106°C);
(3) silice type "HDS" - "Zeosil" 1165MP de la société Rhodia sous forme de microperles (BET et CTAB : environ 150-160 $m^2/g$);
(4) noir de carbone N234;
(5) huile aromatique sous forme libre ("Enerflex 65" de la société BP);
(6) TESPT ("Si69" de la société Degussa);
(7) MESPT (synthétisé selon paragraphe III-1.A);
(8) diphénylguanidine ("Vulcacit D" de la société Bayer);
(9) mélange de cires anti-ozone macro- et microcristallines;
(10) N-1,3-diméthylbutyl-N-phényl-para-phénylènediamine ("Santoflex" 6-PPD de la société Flexsys);
(11) N-cyclohexyl-2-benzothiazyl-sulfénamide (société Flexsys: "Santocure" CBS).

**Tableau 2**

| Composition N°: | C-1 | C-2 |
|---|---|---|
| *Propriétés avant cuisson:* | | |
| Mooney (UM) | 97.1 | 89.5 |
| T5 (min) | 18 | 21 |
| BR (%) | 40.5 | 43.3 |
| $t_i$ (min) | 6.0 | 9.7 |
| $t_{90}$ (min) | 17.2 | 14.9 |
| $t_{90}$- $t_i$ (min) | 11.2 | 5.2 |
| $t_{99}$ (min) | 28.3 | 20.0 |
| $t_{99}$-$t_i$ (min) | 22.3 | 10.3 |
| K ($min^{-1}$) | 0.206 | 0.446 |
| *Propriétés après cuisson:* | | |
| dureté Shore | 68 | 69 |
| MA10 (MPa) | 5.8 | 5.9 |
| MA100 (MPa) | 1.8 | 2.0 |
| MA300 (MPa) | 2.1 | 2.5 |
| MA300/MA100 | 1.19 | 1.22 |
| PH (%) | 30.1 | 25.9 |

(suite)

| Composition N°: | C-1 | C-2 |
|---|---|---|
| tan $(\delta)_{max}$ (40°C) | 0.302 | 0.268 |
| contrainte à la rupture (MPa) | 21.4 | 21.8 |
| allongement à la rupture (%) | 570 | 550 |

**Tableau 3**

| Propriétés (en unités relatives) | P-1 | P-2 |
|---|---|---|
| résistance au roulement | 100 | 104 |
| résistance à l'usure | 100 | 102 |

(une valeur supérieure à 100 indique une performance améliorée par rapport au témoin - base 100)

**Tableau 4**

| Composition N°: | C-3 | C-4 | C-5 |
|---|---|---|---|
| SBR (1) | 82.5 | 82.5 | 82.5 |
| BR (2) | 30 | 30 | 30 |
| silice (3) | 80 | 80 | 80 |
| noir de carbone (4) | 6 | 6 | 6 |
| huile aromatique (5) | 20.5 | 20.5 | 20.5 |
| MESPT (7) | 5.0 | - | - |
| TESPD (12) | - | 5.6 | - |
| MESPD (13) | - | - | 4.4 |
| DPG | 1.5 | 1.5 | 1.5 |
| ZnO | 2.5 | 2.5 | 2.5 |
| acide stéarique | 2 | 2 | 2 |
| paraffine (9) | 1.5 | 1.5 | 1.5 |
| antioxydant (10) | 1.9 | 1.9 | 1.9 |
| soufre | 1.1 | 1.1 | 1.1 |
| accélérateur (11) | 2 | 2 | 2 |

(1) à (11) idem tableau 1;
(12) TESPD (Si75 de la société Degussa);
(13) MESPD (synthétisé selon paragraphe III-1.B).

**Tableau 5**

| Composition N°: | C-3 | C-4 | C-5 |
|---|---|---|---|
| *Propriétés avant cuisson:* | | | |
| Mooney (UM) | 81.6 | 88.3 | 79.0 |
| $T_i$ (min) | 20 | 25 | 35 |
| $t_i$ (min) | 10.0 | 6.0 | 12.5 |
| $t_{90}$ (min) | 15.1 | 18.8 | 19.4 |
| $t_{90}$-$t_i$ (min) | 5.1 | 12.8 | 6.9 |
| $t_{99}$ (min) | 20.4 | 31.7 | 26.2 |
| $t_{99}$- $t_i$ (min) | 10.4 | 25.7 | 13.7 |
| K ($min^{-1}$) | 0.462 | 0.179 | 0.334 |

(suite)

| Composition N°: | C-3 | C-4 | C-5 |
|---|---|---|---|
| *Propriétés après cuisson:* | | | |
| dureté Shore | 69 | 65 | 65 |
| MA10 (MPa) | 5.4 | 5.3 | 4.8 |
| MA100 (MPa) | 1.9 | 1.4 | 1.5 |
| MA300 (MPa) | 2.3 | 1.5 | 1.5 |
| MA300/MA100 | 1.21 | 1.07 | 0.99 |
| PH (%) | 26.5 | 35.6 | 31.7 |
| tan $(\delta)_{max}$ (40°C) | 0.268 | 0.315 | 0.294 |
| contrainte à la rupture (MPa) | 20.6 | 20.9 | 20.9 |
| allongement à la rupture (%) | 550 | 680 | 660 |

**Tableau 6**

| Composition N°: | C-6 | C-7 |
|---|---|---|
| SBR (1) | 82.5 | 82.5 |
| BR (2) | 30 | 30 |
| silice (3) | 40 | 40 |
| noir de carbone (4) | 45 | 45 |
| huile aromatique (5) | 20.5 | 20.5 |
| MESPT (7) | 2.5 | - |
| MESPD (12) | - | 2.2 |
| DPG (8) | 0.75 | 0.75 |
| ZnO | 2.5 | 2.5 |
| acide stéarique | 2 | 2 |
| paraffine (9) | 1.5 | 1.5 |
| antioxydant (10) | 1.9 | 1.9 |
| soufre | 1.1 | 1.1 |
| accélérateur (11) | 2 | 2 |
| (1) à (12) idem tableaux précédents. | | |

**Tableau 7**

| Composition N°: | C-6 | C-7 |
|---|---|---|
| *Propriétés après cuisson:* | | |
| dureté Shore | 67 | 65 |
| MA10 (MPa) | 5.2 | 4.9 |
| MA100 (MPa) | 1.85 | 1.6 |
| MA300 (MPa) | 2.2 | 1.7 |
| MA300/MA100 | 1.19 | 1.12 |
| PH (%) | 34.6 | 39.6 |
| tan $(\delta)_{max}$ (40°C) | 0.365 | 0.380 |
| contrainte à la rupture (MPa) | 19.2 | 18.7 |
| allongement à la rupture (%) | 560 | 650 |

**Tableau 8**

| Composition N°: | C-8 | C-9 |
|---|---|---|
| SBR (1) | 82.5 | 82.5 |
| BR (2) | 30 | 30 |
| silice (3) | 80 | 80 |
| noir de carbone (4) | 6 | 6 |
| huile aromatique (5) | 20.0 | 20.0 |
| TESPT (6) | 6.4 | - |
| MESPT (7) | - | 5.0 |
| DPG (8) | 1.5 | 1.5 |
| ZnO | 2.5 | 2.5 |
| acide stéarique | 2 | 2 |
| paraffine (9) | 1.5 | 1.5 |
| antioxydant (10) | 2.0 | 2.0 |
| soufre | 1.1 | 1.1 |
| accélérateur (11) | 2.0 | 2.0 |
| (1) à (11) idem tableaux précédents. | | |

**Tableau 9**

| Composition N°: | C-8 | C-9 |
|---|---|---|
| *Propriétés avant cuisson:* | | |
| Mooney (UM) | 110 | 107 |
| T5 (min) | 22 | 19 |
| $t_i$ (min) | 10.6 | 10.1 |
| $t_{90}$ (min) | 24.6 | 17.2 |
| $t_{90}$- $t_i$ (min) | 14 | 7.1 |
| K ($min^{-1}$) | 0.16 | 0.32 |
| *Propriétés après cuisson:* | | |
| dureté Shore | 65 | 67 |
| MA10 (MPa) | 5.2 | 5.3 |
| MA100 (MPa) | 1.7 | 1.9 |
| MA300 (MPa) | 2.1 | 2.5 |
| MA300/MA100 | 1.24 | 1.32 |
| PH (%) | 28.9 | 25.1 |
| $tan(\delta)_{max}$ (40°C) | 0.274 | 0.248 |
| contrainte à la rupture (MPa) | 23.9 | 23.3 |
| allongement à la rupture (%) | 600 | 570 |

**Tableau 10**

| Propriétés (en unités relatives) | P-8 | P-9 |
|---|---|---|
| Résistance au roulement : | 100 | 102 |
| Résistance à l'usure : | 100 | 100 |
| Poussée de dérive : | 100 | 100 |
| Freinage sur sol sec : | 100 | 103 |
| Freinage sur sol humide : | 100 | 99 |

(suite)

| | | |
|---|---|---|
| Performance en circuit humide et virageux :<br>- temps de parcours :<br>- note de comportement : | <br><br>100<br>100 | <br><br>100.5 (- 0.5s)<br>100 |

(une valeur supérieure à 100 indique une performance améliorée par rapport au témoin - base 100)

**Tableau 11**

| Composition N°: | C-10 | C-11 |
|---|---|---|
| SBR (14) | 57.75 | 57.75 |
| SBR (15) | 79.75 | 79.75 |
| silice (3) | 80 | 80 |
| noir de carbone (4) | 6 | 6 |
| huile aromatique (5) | 4.0 | 4.0 |
| TESPT (6) | 6.4 | - |
| MESPT (7) | - | 5.0 |
| DPG (8) | 1.5 | 1.5 |
| ZnO | 2.5 | 2.5 |
| acide stéarique | 2 | 2 |
| paraffine (9) | 1.5 | 1.5 |
| antioxydant (10) | 2.0 | 2.0 |
| soufre | 1.1 | 1.1 |
| accélérateur (11) | 2.0 | 2.0 |
| (3) à (11) idem tableau 1 ;<br>(14) SSBR avec 24% de motifs polybutadiène 1-2 ; 40,5% de styrène ; Tg=-30°C ; 42 pce SBR sec étendu avec 37,5% en poids d'huile aromatique (soit un total SSBR + huile égal à 57,75 pce) ;<br>(15) SSBR avec 5 % de motifs polybutadiène 1-2 ; 28 % de styrène ; Tg = -50°C ; 58 pce SBR sec étendu avec 37,5% en poids d'huile aromatique (soit un total SSBR+ huile égal à 79,75 pce). | | |

**Tableau 12**

| Composition N°: | C-10 | C-11 |
|---|---|---|
| *Propriétés avant cuisson:* | | |
| Mooney (UM) | 107 | 108 |
| T5 (min) | 18 | 21 |
| $t_i$ (min) | 9.1 | 12.7 |
| $t_{90}$ (min) | 27.5 | 21.8 |
| $t_{90}$-$t_i$ (min) | 18.4 | 9.1 |
| K ($min^{-1}$) | 0.12 | 0.25 |
| *Propriétés après cuisson:* | | |
| dureté Shore | 67 | 67 |
| MA10 (MPa) | 5.7 | 5.7 |

(suite)

| Composition N°: | C-10 | C-11 |
|---|---|---|
| MA100 (MPa) | 1.7 | 1.8 |
| MA300 (MPa) | 2.0 | 2.3 |
| MA300/MA100 | 1.21 | 1.29 |
| PH (%) | 33.5 | 28.1 |
| $tan(\delta)_{max}$ (40°C) | 0.330 | 0.290 |
| contrainte à la rupture (MPa) | 27.4 | 27.5 |
| allongement à la rupture (%) | 670 | 640 |

**Tableau 13**

| Propriétés (en unités relatives) | P-10 | P-11 |
|---|---|---|
| Résistance au roulement : | 100 | 101 |
| Résistance à l'usure : | 100 | 100 |
| Poussée de dérive : | 100 | 100 |
| Freinage sur sol sec : | 100 | 100 |
| Freinage sur sol humide : | 100 | 101 |
| Performance en circuit humide et virageux :<br>- temps de parcours :<br>- note de comportement : | <br><br>100<br>100 | <br><br>100.5 (- 0.5s)<br>100 |

(une valeur supérieure à 100 indique une performance améliorée par rapport au témoin - base 100)

**Tableau 14**

| Composition N°: | C-12 | C-13 |
|---|---|---|
| SBR (1) | 88.5 | 88.5 |
| BR (2) | 25 | 25 |
| silice (3) | 80 | 80 |
| noir de carbone (4) | 6 | 6 |
| huile aromatique (5) | 20.0 | 20.0 |
| MESPT (7) | 5 | - |
| MESPD (13) | - | 4.4 |
| DPG (8) | 1.5 | 1.5 |
| ZnO | 2.5 | 2.5 |
| acide stéarique | 2 | 2 |
| paraffine (9) | 1.5 | 1.5 |
| antioxydant (10) | 2.0 | 2.0 |
| soufre | 1.1 | 1.1 |
| accélérateur (11) | 2.0 | 2.0 |
| (1) à (13) idem tableau 4. | | |

**Tableau 15**

| Composition N°: | C-12 | C-13 |
|---|---|---|
| *Propriétés avant cuisson:* | | |

(suite)

| Composition N°: | C-12 | C-13 |
|---|---|---|
| Mooney (UM) | 92.5 | 88.5 |
| T5 (min) | 23 | 28.5 |
| BR (%) | 49.2 | 46.3 |
| $t_i$ (min) | 10.2 | 12.5 |
| $t_{90}$ (min) | 18.5 | 24.3 |
| $t_{90}$- $t_i$ (min) | 8.3 | 11.8 |
| K ($min^{-1}$) | 0.278 | 0.195 |
| *Propriétés après cuisson:* | | |
| dureté Shore | 68 | 65 |
| MA10 (MPa) | 5.8 | 5.0 |
| MA100 (MPa) | 1.7 | 1.6 |
| MA300 (MPa) | 2.1 | 1.7 |
| MA300/MA100 | 1.22 | 1.09 |
| PH (%) | 27.9 | 32.1 |
| $tan(\delta)_{max}$ (40°C) | 0.269 | 0.308 |
| contrainte à la rupture (MPa) | 21.2 | 21.4 |
| allongement à la rupture (%) | 620 | 600 |

**Tableau 16**

| Composition N°: | C-14 | C-15 |
|---|---|---|
| SBR (1) | 82.5 | 82.5 |
| BR (2) | 30 | 30 |
| silice (16) | 94 | 94 |
| noir de carbone (4) | 6 | 6 |
| huile aromatique (5) | 20.0 | 20.0 |
| TESPT (6) | 5.6 | - |
| MESPT (7) | - | 4.8 |
| DPG (8) | 1.5 | 1.5 |
| ZnO | 2.5 | 2.5 |
| acide stéarique | 2 | 2 |
| paraffine (9) | 1.5 | 1.5 |
| antioxydant (10) | 2.0 | 2.0 |
| soufre | 1.1 | 1.1 |
| accélérateur (11) | 2.0 | 2.0 |

(1) à (11) idem tableau 1 ;
(16) Silice "HDS" - "Zeosil 1115MP" de la société Rhodia, sous forme de microperles (BET et CTAB : environ 110 $m^2/g$).

**Tableau 17**

| Composition N°: | C-14 | C-15 |
|---|---|---|
| *Propriétés avant cuisson:* | | |
| Mooney (UM) | 93 | 95 |
| T5 (min) | 25 | 21 |

(suite)

| Composition N°: | C-14 | C-15 |
|---|---|---|
| BR (%) | 49 | 48 |
| $t_i$ (min) | 9.3 | 6.7 |
| $t_{90}$ (min) | 23 | 13.5 |
| $t_{90}$-$t_i$ (min) | 13.7 | 6.8 |
| K($min^{-1}$) | 0.13 | 0.34 |
| | | |
| *Propriétés après cuisson:* | | |
| dureté Shore | 67 | 69 |
| MA10 (MPa) | 5.7 | 6.0 |
| MA100 (MPa) | 1.8 | 2.1 |
| MA300 (MPa) | 2.3 | 2.6 |
| MA300/MA100 | 1.27 | 1.25 |
| PH (%) | 30.9 | 28.7 |
| $\tan(\delta)_{max}$ (40°C) | 0.272 | 0.254 |
| contrainte à la rupture (MPa) | 21.1 | 20.2 |
| allongement à la rupture (%) | 600 | 570 |

**Tableau 18**

| Composition N°: | C-16 | C-17 |
|---|---|---|
| NR (17) | 100 | 100 |
| silice (3) | 50 | 50 |
| noir de carbone (18) | 5 | 5 |
| TESPT (6) | 5 | - |
| MESPT (7) | - | 3.85 |
| ZnO | 3 | 3 |
| acide stéarique | 2.5 | 2.5 |
| paraffine (9) | 1 | 1 |
| antioxydant (10) | 2.5 | 2.5 |
| soufre | 1.5 | 1.5 |
| accélérateur (11) | 1.8 | 1.8 |
| (3) à (11) idem tableau 1 ;<br>(17) caoutchouc naturel ;<br>(18) noir de carbone N330. | | |

**Tableau 19**

| Composition N°: | C-16 | C-17 |
|---|---|---|
| *Propriétés avant cuisson:* | | |
| Mooney | 77 | 76 |
| T5 (min) | 13 | 10 |
| $t_i$ (min) | 5.3 | 5.9 |
| $t_{90}$ (min) | 13.2 | 11.8 |
| $t_{90}$-$t_i$ (min) | 7.9 | 5.9 |
| K ($min^{-1}$) | 0.29 | 0.39 |
| | | |
| *Propriétés après cuisson:* | | |
| dureté Shore | 63.4 | 66.4 |

(suite)

| Composition N°: | C-16 | C-17 |
|---|---|---|
| MA10 (MPa) | 4.7 | 5.2 |
| MA100 (MPa) | 2.0 | 2.3 |
| MA300 (MPa) | 2.0 | 2.3 |
| MA300/MA100 | 1.0 | 1.0 |
| PH (%) | 14.3 | 12.6 |
| $\tan(\delta)_{max}$ (60°C) | 0.076 | 0.068 |
| contrainte à la rupture (MPa) | 28.6 | 29.7 |
| allongement à la rupture (%) | 595 | 575 |

## Revendications

1. Pneumatique incorporant une composition élastomérique à base d'au moins (i) un élastomère diénique, (ii) une charge inorganique renforçante utilisée en mélange avec du noir de carbone, et (iii) un tétrasulfure de bis-alkoxysilane à titre d'agent de couplage (charge inorganique/élastomère diénique), **caractérisé en ce que** ledit tétrasulfure d'alkoxysilane est le tétrasulfure de bis-monoéthoxydiméthylsilylpropyle (MESPT) de formule (III) :

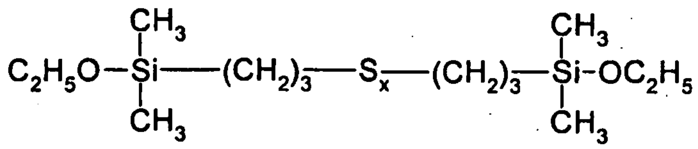

**(III) (en abrégé MESPT)**

dans laquelle x est un nombre entier ou fractionnaire compris entre 3 et 5.

2. Pneumatique selon la revendication 1, dans lequel x est compris dans un domaine de 3,5 à 4,5, de préférence dans un domaine de 3,8 à 4,2.

3. Pneumatique selon les revendications 1 ou 2, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

4. Pneumatique selon la revendication 3, les copolymères de butadiène ou d'isoprène étant choisis parmi les copolymères de butadiène-styrène, les copolymères de butadiène-isoprène, les copolymères d'isoprène-styrène, les copolymères de butadiène-styrène-isoprène et les mélanges de ces copolymères.

5. Pneumatique selon l'une quelconque des revendications 1 à 4, comportant entre 10 et 200 pce (parties en poids pour cent parties d'élastomère) de charge inorganique renforçante.

6. Pneumatique selon l'une quelconque des revendications 1 à 5, la quantité d'alkoxysilane étant comprise entre 1 et 20 pce.

7. Pneumatique selon l'une quelconque des revendications 1 à 6, la quantité d'alkoxysilane représentant entre 0,5% et 20% en poids par rapport à la quantité de charge inorganique renforçante.

8. Pneumatique selon l'une quelconque des revendications 1 à 7, la charge inorganique présentant une surface spécifique BET comprise entre 60 et 250 $m^2/g$.

9. Pneumatique selon la revendication 8, la charge inorganique présentant une surface spécifique BET inférieure à 130 $m^2/g$.

**10.** Pneumatique selon l'une quelconque des revendications 1 à 9, la charge inorganique étant majoritairement de la silice.

**11.** Pneumatique selon l'une quelconque des revendications 1 à 10, le noir de carbone étant présent à un taux compris entre 2 et 20 pce.

**12.** Pneumatique selon la revendication 11, le noir de carbone étant présent à un taux compris dans un domaine de 5 à 15 pce.

**13.** Pneumatique selon l'une quelconque des revendications 3 à 12, l'élastomère diénique étant un copolymère de butadiène-styrène (SBR) ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

**14.** Pneumatique selon la revendication 13, le SBR étant un SBR préparé en solution (SSBR).

**15.** Pneumatique selon les revendications 13 ou 14, le SBR étant utilisé en mélange avec un polybutadiène possédant de préférence plus de 90% de liaisons cis-1,4.

**16.** Pneumatique selon l'une quelconque des revendications 3 à 12, l'élastomère diénique étant un élastomère isoprénique, de préférence du caoutchouc naturel ou un polyisoprène de synthèse cis-1,4.

**17.** Pneumatique selon l'une quelconque des revendications 1 à 16, **caractérisé en ce que** ladite composition élastomérique est incorporée dans au moins une partie du pneumatique choisie parmi la bande de roulement, les sous-couches, les nappes d'armature de sommet, les flancs, les nappes d'armature de carcasse, les talons et les protecteurs.

**18.** Pneumatique selon la revendication 17, **caractérisé en ce que** la composition élastomérique se trouve dans la bande de roulement du pneumatique.

**19.** Pneumatique selon l'une quelconque des revendications 1 à 18, **caractérisé en ce qu'**il se trouve à l'état vulcanisé.

**20.** Utilisation d'un tétrasulfure de bis-monoéthoxydiméthylsilylpropyle (MESPT) de formule (III):

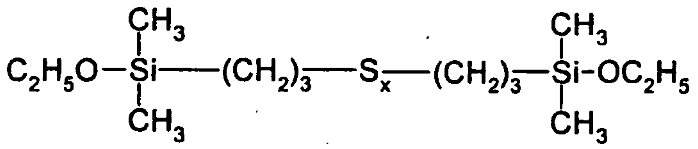

**(III) (en abrégé MESPT)**

dans laquelle x est un nombre entier ou fractionnaire compris entre 3 et 5, pour accélérer par rapport à l'agent de couplage de référence TESPT ou tétrasulfure de triéthoxysilylpropyle, la cinétique de vulcanisation d'un pneumatique ou d'une bande de roulement de pneumatique incorporant une composition élastomérique à base d'une charge inorganique renforçante vulcanisable au soufre.

**21.** Utilisation selon la revendication 20, dans laquelle x est compris dans un domaine de 3,5 à 4,5, de préférence dans un domaine de 3,8 à 4,2.

## Claims

**1.** Tyre incorporating an elastomeric composition based on at least (i) a diene elastomer, (ii) a reinforcing inorganic filler used in a mixture with carbon black and (iii) a bis-alkoxysilane tetrasulphide as (inorganic filler/diene elastomer) coupling agent, **characterized in that** said alkoxysilane tetrasulphide is bis-monoethoxydimethylsilylpropyl tetrasulphide (MESPT) of formula (III):

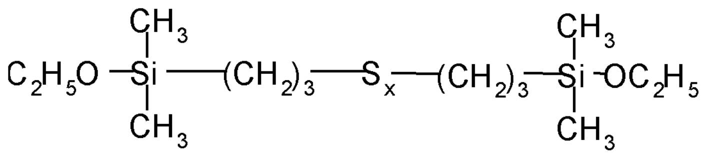

(III) (abbreviated to MESPT)

in which x is an integer or a fraction between 3 and 5.

**2.** Tyre according to Claim 1, in which x lies within a range from 3.5 to 4.5, preferably within a range from 3.8 to 4.2.

**3.** Tyre according to Claims 1 or 2, the diene elastomer being selected from among the group consisting of polybutadienes, natural rubber, synthetic polyisoprenes, butadiene copolymers, isoprene copolymers and mixtures of these elastomers.

**4.** Tyre according to Claim 3, the butadiene or isoprene copolymers being selected from among butadiene-styrene copolymers, butadiene-isoprene copolymers, isoprene-styrene copolymers, butadiene-styrene-isoprene copolymers and mixtures of these copolymers.

**5.** Tyre according to any one of Claims 1 to 4, comprising between 10 and 200 phr (parts by weight per hundred parts of elastomer) of reinforcing inorganic filler.

**6.** Tyre according to any one of Claims 1 to 5, the quantity of alkoxysilane being between 1 and 20 phr.

**7.** Tyre according to any one of Claims 1 to 6, the quantity of alkoxysilane representing between 0.5% and 20% by weight relative to the quantity of reinforcing inorganic filler.

**8.** Tyre according to any one of Claims 1 to 7, the inorganic filler having a BET specific surface area of between 60 and 250 $m^2$/g.

**9.** Tyre according to Claim 8, the inorganic filler having a BET specific surface area of less than 130 $m^2$/g.

**10.** Tyre according to any one of Claims 1 to 9, the inorganic filler being majoritarily silica.

**11.** Tyre according to any one of Claims 1 to 10, the carbon black being present in an amount of between 2 and 20 phr.

**12.** Tyre according to Claim 11, the carbon black being present in an amount lying within a range from 5 to 15 phr.

**13.** Tyre according to any one of Claims 3 to 12, the diene elastomer being a butadiene-styrene copolymer (SBR) having a styrene content of between 20% and 30% by weight, a content of vinyl bonds of the butadiene fraction of between 15% and 65%, a content of trans-1,4 bonds of between 20% and 75% and a glass transition temperature of between -20°C and -55°C.

**14.** Tyre according to Claim 13, the SBR being an SBR prepared in solution (SSBR).

**15.** Tyre according to Claims 13 or 14, the SBR being used in a mixture with a polybutadiene having preferably more than 90% cis-1,4 bonds.

**16.** Tyre according to any one of Claims 3 to 12, the diene elastomer being an isoprene elastomer, preferably natural rubber or a cis-1,4 synthetic polyisoprene.

**17.** Tyre according to any one of Claims 1 to 16, **characterized in that** said elastomeric composition is incorporated in at least part of the tyre selected from among the tread, the underlayers, the crown reinforcement plies, the sidewalls, the carcass reinforcement plies, the beads and the protectors.

**18.** Tyre according to Claim 17, **characterized in that** the elastomeric composition is in the tread of the tyre.

**19.** Tyre according to any one of Claims 1 to 18, **characterized in that** it is in the vulcanised state.

**20.** Use of a bis-monoethoxydimethylsilylpropyl tetrasulphide (MESPT) of formula (III):

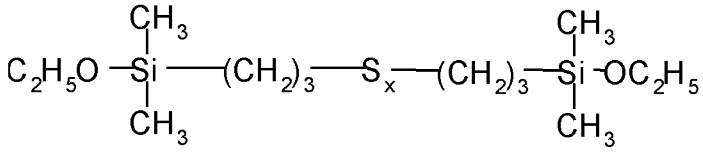

(III) (abbreviated to MESPT)

in which x is an integer or a fraction between 3 and 5, for accelerating, relative to the TESPT or triethoxysilylpropyl tetrasulphide reference coupling agent, the vulcanization kinetics of a tyre or of a tyre tread incorporating an elastomeric composition based on a reinforcing inorganic filler that can be vulcanized using sulphur.

**21.** Use according to Claim 20, in which x lies within a range from 3.5 to 4.5, preferably within a range from 3.8 to 4.2.

## Patentansprüche

**1.** Luftreifen, der eine Elastomerzusammensetzung auf Grundlage mindestens (i) eines Dien-Elastomers, (ii) eines anorganischen verstärkenden Füllstoffs, der in Mischung mit Ruß verwendet wird, und (iii) eines bis-Alkoxysilantetrasulfids als Kupplungsmittel (anorganischer Füllstoff / Dien-Elastomer) umfasst, **dadurch gekennzeichnet, dass** es sich bei dem Alkoxysilantetrasulfid um bis-Monoethoxydimethylsilylpropyltetrasulfid (MESPT) der Formel (III) handelt:

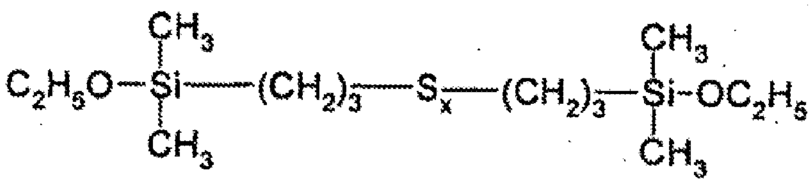

(III) (MESPT abgekürzt)

wobei x eine ganze Zahl oder eine Bruchzahl im Bereich von 3 bis 5 ist.

**2.** Luftreifen nach Anspruch 1, wobei x in einem Bereich von 3,5 bis 4,5, vorzugsweise in einem Bereich von 3,8 bis 4,2, liegt.

**3.** Luftreifen nach einem der Ansprüche 1 oder 2, wobei das Dien-Elastomer aus der Gruppe ausgewählt ist, die aus den Polybutadienen, natürlichem Kautschuk, den Polyisoprenen synthetischen Ursprungs, den Butadien-Copolymeren, den Isopren-Copolymeren und den Mischungen dieser Elastomere besteht.

**4.** Luftreifen nach Anspruch 3, wobei die Butadien-oder Isopren-Copolymere aus den Butadien-Styrol-Copolymeren, den Butadien-Isopren-Copolymeren, den Isopren-Styrol-Copolymeren, den Butadien-Styrol-Isopren-Copolymeren und den Mischungen dieser Copolymere ausgewählt sind.

**5.** Luftreifen nach einem beliebigen der Ansprüche 1 bis 4, der zwischen 10 und 200 phr (Gewichtsteile auf hundert Teile des Elastomers) an anorganischem verstärkenden Füllstoff aufweist.

**6.** Luftreifen nach einem beliebigen der Ansprüche 1 bis 5, wobei die Menge an Alkoxysilan im Bereich von 1 bis 20 phr liegt.

**7.** Luftreifen nach einem beliebigen der Ansprüche 1 bis 6, wobei die Menge an Alkoxysilan zwischen 0,5 und 20 Gew.-

% ausmacht, bezogen auf die Menge an anorganischem verstärkenden Füllstoff.

8. Luftreifen nach einem beliebigen der Ansprüche 1 bis 7, wobei der anorganische Füllstoff eine spezifische BET-Oberfläche im Bereich von 60 bis 250 $m^2/g$ aufweist.

9. Luftreifen nach Anspruch 8, wobei der anorganische Füllstoff eine spezifische BET-Oberfläche von weniger als 130 $m^2/g$ aufweist.

10. Luftreifen nach einem beliebigen der Ansprüche 1 bis 9, wobei es sich bei dem anorganischen Füllstoff überwiegend um Siliciumdioxid handelt.

11. Luftreifen nach einem beliebigen der Ansprüche 1 bis 10, wobei der Ruß in einem Gehalt im Bereich von 2 bis 20 phr vorliegt.

12. Luftreifen nach Anspruch 11, wobei der Ruß zu einem Gehalt in einem Bereich von 5 bis 15 phr vorliegt.

13. Luftreifen nach einem beliebigen der Ansprüche 3 bis 12, wobei es sich bei dem Dien-Elastomer um ein Butadien-Styrol-Copolymer (SBR) mit einem Styrolgehalt im Bereich von 20 bis 30 Gew.-%, einem Gehalt des Butadienanteils an Vinylbindungen im Bereich von 15 % bis 65 %, einem Gehalt an trans-1,4-Bindungen im Bereich von 20 % bis 75 % und einer Glasübergangstemperatur im Bereich von -20 °C bis -55 °C handelt.

14. Luftreifen nach Anspruch 13, wobei es sich bei dem SBR um ein SBR handelt, das in Lösung hergestellt wird (SSBR).

15. Luftreifen nach den Ansprüchen 13 oder 14, wobei das SBR, das in Mischung mit einem Polybutadien verwender wird, vorzugsweise mehr als 90 % an cis-1,4-Bindungen besitzt.

16. Luftreifen nach einem beliebigen der Ansprüche 3 bis 12, wobei es sich bei dem Dien-Elastomer um ein Isopren-Elastomer, vorzugsweise um natürlichen Kautschuk oder um ein cis-1,4-Polyisopren synthetischer Herkunft, handelt.

17. Luftreifen nach einem beliebigen der Ansprüche 1 bis 16, **dadurch gekennzeichnet, dass** die Elastomerzusammensetzung in mindestens einen Abschnitt des Luftreifens, ausgewählt aus dem Laufstreifen, den tieferliegenden Schichten, den gipfelseitigen Verstärkungslagen, den Seitenwänden, den Karkassen-Verstärkungslagen, den Wulsten und den Schutzelementen, eingearbeitet ist.

18. Luftreifen nach Anspruch 17, **dadurch gekennzeichnet, dass** die Elastomerzusammensetzung sich im Laufstreifen des Luftreifens befindet.

19. Luftreifen nach einem beliebigen der Ansprüche 1 bis 18, **dadurch gekennzeichnet, dass** er sich in vulkanisiertem Zustand befindet.

20. Verwendung eines bis-Monoethoxydimethylsilylpropyltetrasulfids (MESPT) der Formel (III)

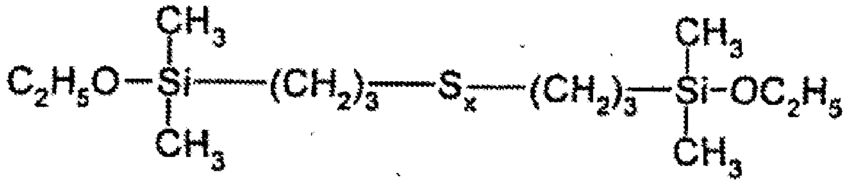

(III) (MESPT abgekürzt)
wobei x eine ganze Zahl oder eine Bruchzahl im Bereich von 3 bis 5 ist, um die Vulkanisationskinetik eines Luftreifens oder eines Luftreifenlaufstreifens, der eine Elastomerzusammensetzung umfasst, welche auf einem anorganischen verstärkenden Füllstoff beruht und mit Schwefel vulkanisierbar ist, unter Bezugnahme auf das Standard-Kupplungsmittel TESPT oder Triethoxysilylpropyltetrasulfid zu beschleunigen.

21. Verwendung nach Anspruch 20, wobei x in einem Bereich von 3,5 bis 4,5, vorzugsweise in einem Bereich von 3,8 bis 4,2, liegt.

Fig. 1

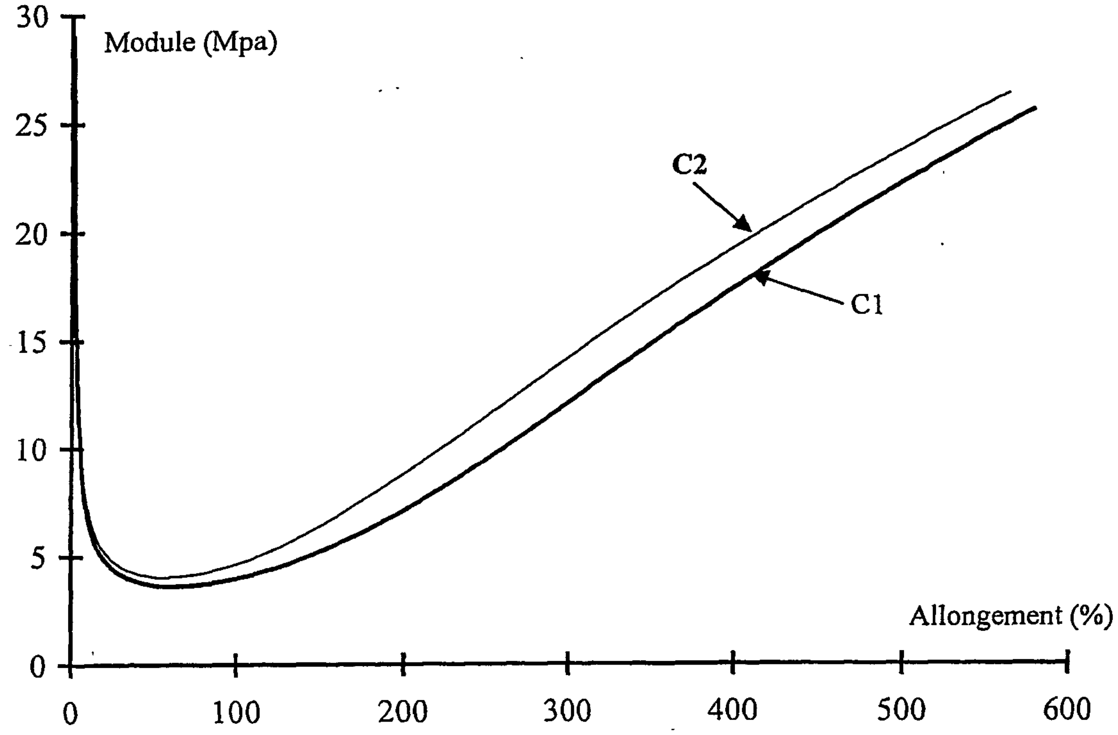
Module (Mpa)
30
25
20
15
10
5
0
C2
C1
Allongement (%)
0
100
200
300
400
500
600

Fig. 2

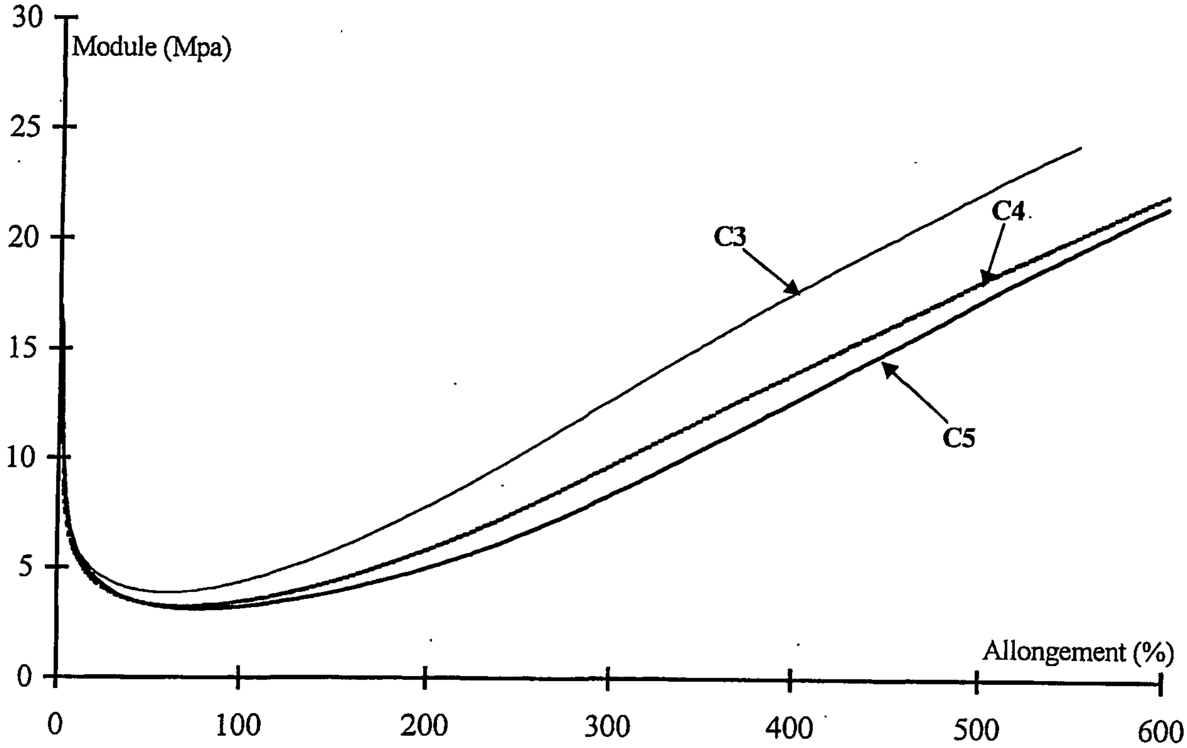
Module (Mpa)
30
25
20
15
10
5
0
C3
C4
C5
Allongement (%)
0
100
200
300
400
500
600

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 501227 A
- US 5227425 A
- EP 735088 A
- US 5852099 A
- EP 810258 A
- US 5900449 A
- WO 9902590 A
- WO 0005300 A
- WO 0005301 A
- WO 0210269 A
- FR 2094859 A
- GB 1310379 A
- FR 2206330 A
- US 3873489 A
- US 4002594 A
- FR 2149339 A
- US 3842111 A
- US 3997581 A
- US 4072701 A
- US 4129585 A
- US 5684172 A
- US 5708053 A
- EP 1043357 A
- WO 9637547 A
- WO 9742256 A
- WO 9842778 A
- WO 9928391 A
- EP 848006 A
- US 5489701 A
- US 4125552 A
- EP 732362 A
- US 5580919 A
- EP 773224 A
- US 5663395 A
- EP 785206 A
- US 5663358 A
- EP 895996 A
- US 5892085 A

### Littérature non-brevet citée dans la description

- *Plastics, Rubber and Composites Processing and Applications,* 1996, vol. 25 (7), 327
- *Rubber Chemistry and Technology,* 1996, vol. 69, 325
- **Brunauer-Emmett-Teller.** *The Journal of the American Chemical Society,* Février 1938, vol. 60, 309